(19) **Europäisches Patentamt / European Patent Office / Office européen des brevets**

(11) **EP 2 916 238 A1**

(12) # EUROPEAN PATENT APPLICATION
published in accordance with Art. 153(4) EPC

(43) Date of publication:
**09.09.2015 Bulletin 2015/37**

(51) Int Cl.:
***G06F 17/30*** (2006.01)     ***G06F 17/27*** (2006.01)

(21) Application number: **13847523.1**

(22) Date of filing: **07.03.2013**

(86) International application number:
**PCT/JP2013/056345**

(87) International publication number:
**WO 2014/061285 (24.04.2014 Gazette 2014/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.10.2012 JP 2012232057**

(71) Applicant: **Rakuten, Inc.**
**Tokyo 140-0002 (JP)**

(72) Inventor: **SHINZATO Keiji**
**Tokyo 140-0002 (JP)**

(74) Representative: **EIP**
**Fairfax House**
**15 Fulwood Place**
**London WC1V 6HU (GB)**

(54) **CORPUS GENERATING DEVICE, CORPUS GENERATING METHOD, AND CORPUS GENERATING PROGRAM**

(57)     A corpus creation device includes an acquisition unit that acquires item page data containing description data related to an item and an attribute list where an attribute name and an attribute value related to the item are associated, an adding unit that, when an attribute value in an attribute list contained in item page data is contained in description data in the item page data, adds an attribute tag identifying an attribute name with which the attribute value is associated in the attribute list to the attribute value contained in the description data, and an output unit that outputs description data in which an attribute tag is added as corpus data.

## Fig.1

## Description

## Technical Field

The present invention relates to a corpus creation device, a corpus creation method, a corpus creation program, and a computer-readable recording medium storing the program.

## Background Art

In an electronic commerce site, information of an item on sale is shown on an item page and presented to users. The item page contains a description related to the features of the item and the like. Further, in order to present the features of the item to users in a way easy to understand, the item page contains an attribute list in which an attribute name and an attribute value of the item are associated with each other. However, because the creation of the attribute list is left to a shop at the electronic commerce site, not all item pages have the attribute list. As a technique contributing to the creation of such an attribute list, a technique that acquires pair information where an attribute value is associated with an attribute from an organized list of attributes in web data is known (see Patent Literature 1, for example).

## Citation List

## Patent Literature

PTL 1: Japanese Unexamined Patent Application Publication No. 2008-269106

## Summary of Invention

## Technical Problem

For the creation of the attribute list, attribute values acquired from lists in web data are not exhaustive and thus not sufficient. In order to automatically create the attribute list by acquiring attributes values from descriptions of an item page, it is desirable to prepare a large quantity of descriptions of the item in which information identifying an attribute is added to an attribute value as corpus data and use an analysis device that has machine-learned the corpus data. However, it takes an extremely large amount of time and effort to create such corpus data in large quantity.

In view of the foregoing, an object of the present invention is to save time and effort to create corpus data in which information identifying an attribute is added to an attribute value.

## Solution to Problem

To solve the above problem, a corpus creation device according to one aspect of the present invention includes an acquisition means configured to acquire web page data containing description data related to a presented object presented on a web page and an attribute list where an attribute name and an attribute value related to the presented object are associated with each other, an adding means configured to, when an attribute value in an attribute list contained in web page data acquired by the acquisition means is contained in description data contained in the web page data, add an attribute tag identifying an attribute name with which the attribute value is associated in the attribute list to the attribute value contained in the description data, and an output means configured to output description data in which an attribute tag is added by the adding means as corpus data.

A corpus creation method according to one aspect of the present invention is a corpus creation method in a corpus creation device for creating corpus data, the method including an acquisition step of acquiring web page data containing description data related to a presented object presented on a web page and an attribute list where an attribute name and an attribute value related to the presented object are associated with each other, an adding step of, when an attribute value in an attribute list contained in web page data acquired in the acquisition step is contained in description data contained in the web page data, adding an attribute tag identifying an attribute name with which the attribute value is associated in the attribute list to the attribute value contained in the description data, and an output step of outputting description data in which an attribute tag is added in the adding step as corpus data.

A corpus creation program according to one aspect of the present invention is a corpus creation program causing a computer to function as a corpus creation device for creating corpus data, the program causing the computer to implement an acquisition function to acquire web page data containing description data related to a presented object presented on a web page and an attribute list where an attribute name and an attribute value related to the presented object are associated with each other, an adding function to, when an attribute value in an attribute list contained in web page data acquired by the acquisition function is contained in description data contained in the web page data, add an attribute tag identifying an attribute name with which the attribute value is associated in the attribute list to the attribute value contained in the description data, and an output function to output description data in which an attribute tag is added by the adding function as corpus data.

According to the above-described aspects, when an attribute value contained in an attribute list is contained in description data, an attribute tag that identifies an attribute name with which the attribute value is associated in the attribute list is added to the attribute value, and it is therefore possible to add the attribute tag appropriately to the attribute value that indicates the features of the presented object. Then, because the description data in which the attribute tag is added appropriately is output as corpus data, it is possible to save time and effort to create corpus data to be used for machine learning, for example.

In a corpus creation device according to another aspect, the adding means refers to pair aggregate data containing a plurality of attribute pair data where an attribute name and an attribute value related to the presented object are associated with each other and further containing a synonym attribute name synonymous with one attribute name in association with the one attribute name, extracts an attribute value in attribute pair data contained in the pair aggregate data from description data contained in the web page data, and when the extracted attribute value is contained in an attribute list of the web page data as an attribute value of the one attribute name or a synonym attribute name of the one attribute name associated in the attribute pair data, adds an attribute tag identifying the one attribute name to the attribute value.

According to this aspect, when an attribute value extracted from description data related to an item based on pair aggregate data is contained in an attribute list of the item as an attribute value of an attribute name associated in attribute pair data, an attribute tag is added to the attribute value, and it is therefore possible to add the attribute tag appropriately to the attribute value that indicates the features of the presented object. Further, even when an attribute name with which the attribute value is associated in the attribute list corresponds to a synonym attribute name, addition of an attribute tag to the attribute value is performed, and it is therefore possible to increase the amount of corpus data to be output. Furthermore, when an attribute name corresponds to a synonym attribute name, an attribute tag that identifies one attribute name is added in substitution for the synonym attribute name, and therefore the degradation of the quality of corpus data caused by spelling variants of an attribute name is prevented.

In a corpus creation device according to another aspect, the adding means extracts an attribute value in attribute pair data contained in the pair aggregate data from the description data, and when the extracted attribute value is not contained in an attribute list of the web page data as an attribute value of an attribute name associated in the attribute pair data and another attribute value different from the extracted attribute value is contained in the attribute list in association with the attribute name, adds a non-attribute tag indicating that the attribute value does not represent an attribute of the presented object to the extracted attribute value.

According to this aspect, when an attribute value extracted from the description data is not contained in an attribute list as an attribute value of an attribute name associated in the attribute pair data and another attribute value different from the extracted attribute value is associated with the attribute name, a non-attribute tag is added to the extracted attribute value. It is thereby possible to create the corpus data that contains information indicating that the attribute value extracted from the description data is not appropriate as an attribute value indicating the features of the presented object. It is thereby possible to create corpus data that is more effective as corpus data to be used for machine learning and the like.

In a corpus creation device according to another aspect, when description data of web page data acquired by the acquisition means includes a plurality of paragraphs, the output means outputs description data where the number of added attribute tags is a specified number of more as corpus data.

In the case where description data includes a plurality of paragraphs, a paragraph in which many attribute tags are added is likely to include a sentence that appropriately describes the features of the presented object. According to this aspect, description data in a paragraph in which a specified number or more of attribute tags are added is output as corpus data, and it is therefore possible to provide high quality corpus data.

In a corpus creation device according to another aspect, when description data of web page data acquired by the acquisition means includes a plurality of paragraphs, the output means outputs description data where the number of added attribute tags is largest as corpus data.

In the case where description data includes a plurality of paragraphs, a paragraph in which many attribute tags are added is likely to include a sentence that appropriately describes the features of the presented object. According to this aspect, description data in a paragraph with the largest number of added attribute tags is output as corpus data, and it is therefore possible to provide high quality corpus data.

In a corpus creation device according to another aspect, the output means classifies a plurality of parts included in description data in which the attribute tag is added into a plurality of groups according to a specified rule, and outputs a part of each group in which the attribute tag is added as corpus data for each group.

Description data related to an item contains both of a title part of the presented object and a text part that describes the features of the presented object or the like in some cases, and attribute values contained in the respective parts appear in different ways. In such a case also, because sentences are classified into a plurality of groups based on a specified rule and corpus data is output for each group, the quality as corpus data to be used for machine learning and the like is maintained.

In a corpus creation device according to another aspect, the output means performs morpheme analysis on a plurality of parts included in description data in which the attribute tag is added, and classifies the plurality of parts into a plurality of groups according to a specified morpheme analysis result.

According to this aspect, because a plurality of parts included in description data are appropriately classified according to the features of each part, the quality of output corpus data is maintained.

In a corpus creation device according to another aspect, the adding means performs morpheme analysis on each of a plurality of parts included in the description data, and adds the attribute tag to a part having a specified morpheme analysis result.

According to this aspect, description data related to a presented object contains both of a title part of the presented object and a text part that describes the features of the presented object or the like in some cases, and attribute values contained in the respective parts appear in different ways. In such a case also, because an attribute tag is added only to a part having specified characteristics in morphological analysis of the sentences of the description data, and the part of the description data in which an attribute tag is added is output as corpus data in this aspect, the quality as corpus data is maintained.

In a corpus creation device according to another aspect, when an attribute value contained in the description data of the web page data appears in an attribute list of the web page data more than one time in association with different attribute names, the output means does not output the description data as corpus data.

According to this aspect, in the case where an extracted attribute value is associated with a plurality of different attribute names, an attribute name to be associated with the attribute value is unknown, and therefore the degradation of the quality of the corpus data is prevented by not outputting description data containing such an attribute value as corpus data.

In a corpus creation device according to another aspect, when a plurality of attribute lists respectively related to a plurality of presented objects are contained in web page data acquired by the acquisition means, the adding means does not perform addition of an attribute tag to description data.

According to this aspect, it is unknown to which of a plurality of presented objects contained in web page data the extracted attribute value is related, and therefore addition of an attribute tag to description data is not performed. The degradation of the quality of corpus data is thereby prevented.

In a corpus creation device according to another aspect, when a plurality of attribute lists respectively related to a plurality of presented objects are contained in web page data acquired by the acquisition means, the adding means detects a region where the attribute list and the description data for each presented object are included in the web page data based on description information for displaying web page data, refers to the attribute list and the description data included in the region in association as an attribute list and description data related to one presented object, and performs addition of an attribute tag to an attribute value contained in description data.

According to this aspect, a region where an attribute list and description data for each presented object are included is detected from web page data containing information of a plurality of presented objects, and the attribute list and description data included in the region are treated as information related to one presented object, and therefore an appropriate attribute list is referred to when adding an attribute tag to the attribute value extracted from the description data. Accordingly, even when a plurality of attribute lists related to an item are contained in one web page data, the degradation of the quality of corpus data is prevented.

In a corpus creation device according to another aspect, when a plurality of attribute lists respectively related to a plurality of presented objects are contained in web page data acquired by the acquisition means, the adding means specifies a part of description data where an attribute value contained in one attribute list appears with a specified frequency or more among description data contained in the web page data, refers to the one attribute list and the specified part of the description data in association as an attribute list and description data related to one presented object, and performs addition of an attribute tag to an attribute value contained in description data.

According to this aspect, in web page data containing information of a plurality of presented objects, a part of description data where an attribute value contained in an attribute list appears with a specified frequency or more is specified, and the attribute list and the specified part of the description data are associated as information related to the same presented object. Then, the attribute list associated as information for the same item is referred to when adding an attribute tag to the attribute value extracted from the part of the description data. Accordingly, even when a plurality of attribute lists related to a presented object are contained in one web page data, the degradation of the quality of corpus data is prevented.

In a corpus creation device according to another aspect, the corpus creation device further includes a generation means configured to acquire a plurality of web page data containing attribute lists where an attribute name and an attribute value related to a presented object are associated, and when a first attribute value in a first attribute list contained in first web page data among the acquired web page data and a second attribute value in a second attribute list contained in second web page data among the acquired web page data are the same, and web page data in which a first attribute name associated with the first attribute value and a second attribute name associated with the second attribute value are both contained in one attribute list does not exist among the plurality of web page data, generate synonym attribute name information where the first attribute name and the second attribute name are associated with each other, and the output means may set one representative attribute name and a synonym attribute name being an attribute name other than the representative attribute name based on specified conditions among a plurality of attribute names associated with one another using synonym attribute name information generated by the generation means, substitutes an attribute tag identifying the representative attribute name for an attribute tag identifying the synonym attribute name in description data in which an attribute tag has been added by the adding means, and outputs the description data as corpus data.

According to this aspect, a plurality of different attribute names indicating the same attribute related to a presented object are associated with one another, a representative attribute name and a synonym attribute name are set among the plurality of associated attribute names, and when an attribute tag identifying the synonym attribute name is added to an attribute value in description data, the attribute tag is substituted with an attribute tag identifying the representative attribute name. Accordingly, the degradation of the quality of corpus data caused by spelling variants of an attribute name is prevented.

In a corpus creation device according to another aspect, the corpus creation device further includes a generation means configured to, when a first attribute name and a second attribute name associated with the same attribute value in a plurality of pairs of attribute names and attribute values appearing with a specified frequency or more in attribute lists contained in a plurality of web page data acquired by the acquisition means are not contained in one attribute list, generate synonym attribute name information where the first attribute name and the second attribute name are associated with each other, and the output means may set one representative attribute name and a synonym attribute name being an attribute name other than the representative attribute name based on specified conditions among a plurality of attribute names associated with one another using synonym attribute name information generated by the generation means, substitutes an attribute tag identifying the representative attribute name for an attribute tag identifying the synonym attribute name in description data in which an attribute tag has been added by the adding means, and outputs the description data as corpus data.

According to this aspect, a plurality of different attribute names indicating the same attribute related to a presented object are associated with one another, a representative attribute name and a synonym attribute name are set among the plurality of associated attribute names, and when an attribute tag identifying the synonym attribute name is added to an attribute value in description data, the attribute tag is substituted with an attribute tag identifying the representative attribute name. Accordingly, the degradation of the quality of corpus data caused by spelling variants of an attribute name is prevented.

In a corpus creation device according to another aspect, the output means may not output description data as corpus data in which one attribute value where a proportion of a value indicating a frequency that the one attribute value is contained in description data contained in a plurality of web page data acquired by the acquisition means to a value indicating a frequency that the one attribute value is contained in attribute lists contained in the plurality of web page data is a specified value or more is contained with an attribute tag.

According to this aspect, an attribute value that is likely to be provided with an incorrect attribute tag is determined appropriately, and it is avoided to output description data containing an attribute value with such an attribute tag as corpus data. The degradation of the quality of the corpus data is thereby prevented.

In a corpus creation device according to another aspect, the corpus creation device may further include an analysis means configured to analyze a plurality of attribute values extracted from a plurality of web page data and extract a form pattern of the attribute values, and the output means may not output description data containing an attribute value matching the form pattern and to which an attribute tag is not added by the adding means as corpus data.

According to this aspect, an attribute value to which an attribute tag should be added is appropriately determined, and it is avoided to output description data in which an attribute tag is not added to such an attribute value as corpus data. The degradation of the quality of the corpus data is thereby prevented.

**Advantageous Effects of Invention**

According to one aspect of the preset invention, it is possible to save time and effort to create corpus data in which information identifying an attribute is added to an attribute value.

**Brief Description of Drawings**

Fig. 1 is a block diagram showing a functional configuration of a corpus creation device.
Fig. 2 is a diagram showing a hardware configuration of a corpus creation device.
Fig. 3 is a diagram schematically showing item page data.
Fig. 4 is a diagram showing a structure of a pair aggregate data storage unit and an example of data stored therein.
Fig. 5 is a diagram showing an example of description data contained in item page data, an attribute list contained in the same item page data as the description data, and corpus data output by an output unit.
Fig. 6 is a diagram showing an example of corpus data to be machine-learned, description data to be analyzed, and output data to which a tag is added.
Fig. 7 is a diagram showing an example of description data, an attribute list in item page data in which the description data is contained, and corpus data to be output.

Fig. 8 is a diagram illustrating output of corpus data by an output unit in the case where description data in item page data includes a plurality of paragraphs.

Fig. 9 is a diagram illustrating output of corpus data by an output unit in the case where description data in item page data includes a plurality of different sections.

Fig. 10 is a diagram illustrating the case where an output unit avoids outputting corpus data.

Fig. 11 is a diagram illustrating processing of adding an attribute tag in the case where information of a plurality of items is contained in one item page data.

Fig. 12 is a diagram illustrating another example of processing of adding an attribute tag in the case where information of a plurality of items is contained in one item page data.

Fig. 13 is a block diagram showing a functional configuration of a corpus creation device according to another embodiment.

Fig. 14 is a diagram showing an example of a first attribute list contained in first item page data, a second attribute list contained in second item page data, an example of an attribute list contained in one item page data among a plurality of item page data different from the first and second item page data, and an example of synonym attribute name information.

Fig. 15(a) is a diagram showing an example of association of an attribute name based on a pair of an attribute name and an attribute value appearing in an attribute list with a specified frequency or more, Fig. 15(b) is a diagram showing an example of an attribute list, Fig. 15(c) is a diagram showing an example of synonym attribute name information, and Fig. 15(d) is a diagram showing an example of merged synonym attribute name information.

Fig. 16 is a block diagram showing a functional configuration of a corpus creation device according to another embodiment.

Fig. 17(a) is a diagram showing an example of extraction of a morpheme pattern of an attribute value, and Fig. 17(b) is a diagram showing an example of a morpheme pattern of an attribute value.

Fig. 18 is a flowchart showing an example of a process of a corpus creation method.

Fig. 19 is a diagram showing a configuration of a corpus creation program.

**Description of Embodiments**

An embodiment of the present invention is described hereinafter in detail with reference to the appended drawings. Note that, in the description of the drawings, the same or equivalent elements are denoted by the same reference symbols, and the redundant explanation thereof is omitted.

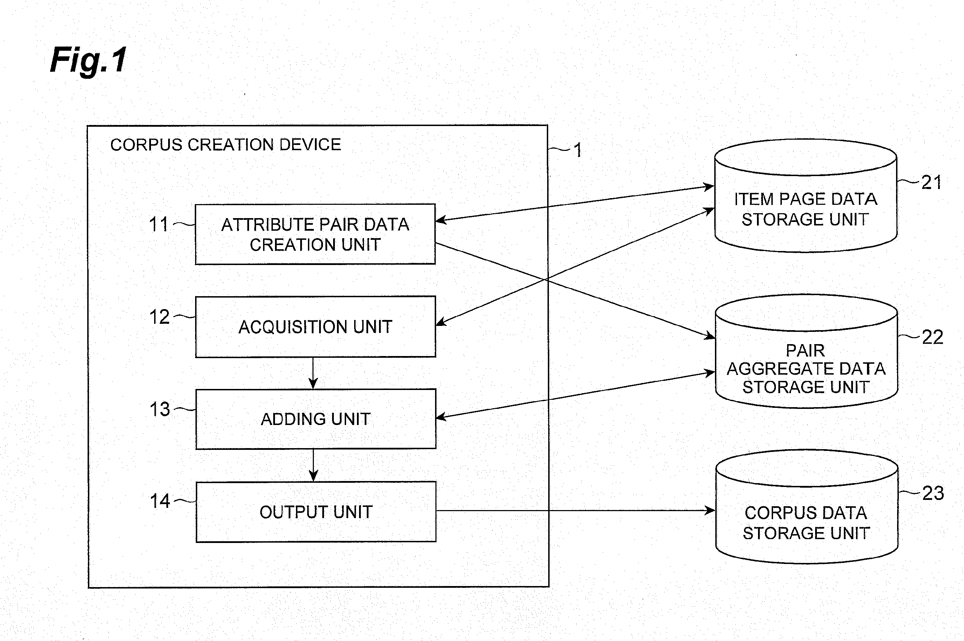

Fig. 1 is a block diagram showing a functional configuration of a corpus creation device 1 according to this embodiment. The corpus creation device 1 is a device that creates corpus data from description data related to a presented object that is presented in web page data. The corpus creation device 1 according to this embodiment creates corpus data from description data contained in an item page that presents an item on sale in an electronic commerce site. Specifically, the corpus creation device 1 creates corpus data in which an attribute value of an item contained in description data is provided with an attribute tag that identifies an attribute name of the attribute value. Note that the web page data that is used when the corpus creation device 1 creates the corpus data is not limited to an item page data in an electronic commerce site. Further, a presented object in the web page data that is used when the corpus creation device 1 creates the corpus data is not limited to an item. For the creation of the corpus data, pair aggregate data that includes a plurality of attribute pair data in which an attribute name and an attribute value related to an item are associated may be used. The pair aggregate data and the attribute pair data are described later.

In an electronic commerce site, information about an item on sale is shown on an item page. The item page contains a description of the features of the item and the like. Further, in order to present the features of the item to users in a way easy to understand, the item page preferably contains an attribute list in which an attribute name and an attribute value of the item are associated with each other. However, because not all item pages have the attribute list, it is desirable to automatically create the attribute list by acquiring the attributes value from the description in the item page.

The corpus data that is output from the corpus creation device 1 according to this embodiment is used for automatic creation of an attribute list from description data, for example. Specifically, automatic creation of an attribute list from description data is made possible by an analysis device that has machine-learned a large quantity of corpus data. Note that, although this embodiment is described using an electronic commerce site where wines are sold as items as an example, the item is not limited to wine. Further, although this embodiment is described using a Japanese web site as an example, the language treated in the corpus device according to this embodiment is not limited to Japanese.

As shown in Fig. 1, the corpus creation device 1 according to this embodiment functionally includes an attribute pair data creation unit 11, an acquisition unit 12 (acquisition means), an adding unit 13 (adding means), and an output unit 14 (output means). Further, the functional units 11 to 14 of the corpus creation device 1 can access storage means such as an item page data storage unit 21, a pair aggregate data storage unit 22 and a corpus data storage unit 23.

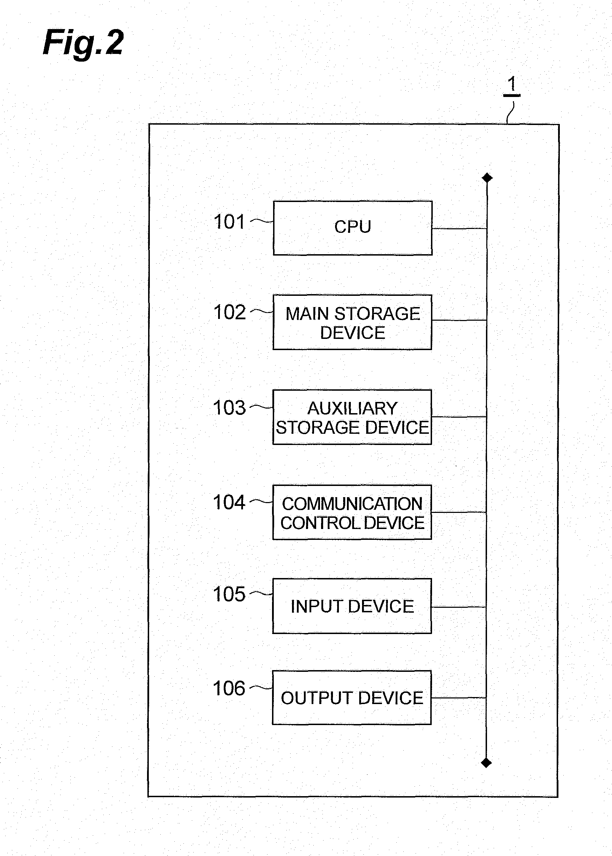

Fig. 2 is a hardware configuration diagram of the corpus creation device 1. As shown in Fig. 2, the corpus creation device 1 is physically configured as a computer system that includes a CPU 101, a main storage device 102 such as memory like RAM and ROM, an auxiliary storage device 103 such as a hard disk, a communication control device 104 such as a network card, an input device 105 such as a keyboard and a mouse, an output device 106 such as a display and the like.

The functions shown in Fig. 1 are implemented by loading given computer software (corpus creation program) onto hardware such as the CPU 101 or the main storage device 102 shown in Fig. 2, making the communication control device 104, the input device 105 and the output device 106 operate under control of the CPU 101, and performing reading and writing of data in the main storage device 102 or the auxiliary storage device 103. Data and database required for the processing is stored in the main storage device 102 or the auxiliary storage device 103.

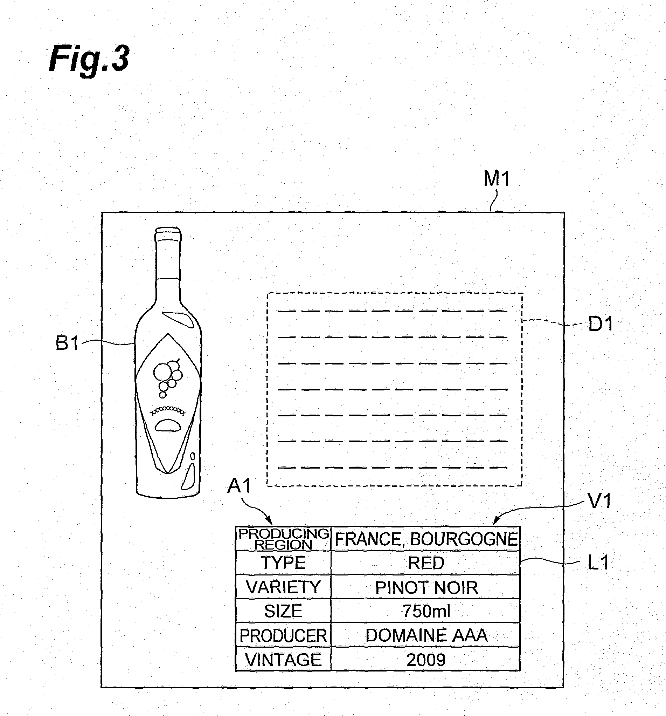

Prior to describing the functional units of the corpus creation device 1, the item page data and the item page data storage unit 21 are described hereinafter. The item page data storage unit 21 is a storage means that stores a plurality of item page data indicating items on sale in an electronic commerce site. Fig. 3 is a diagram schematically showing item page data. Specifically, Fig. 3 shows an item page displayed based on the item page data.

In the example shown in Fig. 3, item page data M1 contains an item image B1, description data D1, and an attribute list L1. The description data D1 is text data that describes the features and the like of the item shown on the item page. The attribute list L1 is a list in which an attribute name A1 and an attribute value V1 related to the item are associated with each other. Although the item page data M1 contains the description data D1 and the attribute list L1 in the example shown in Fig. 3, there are cases where item page data does not contain an attribute list.

The functional units of the corpus creation device 1 are described hereinbelow. The attribute pair data creation unit 11 is a part that creates attribute pair data in which an attribute name and an attribute value related to an item are associated with each other. The attribute pair data creation unit 11 acquires the item page data M1 that contains the attribute list L1 by referring to the item page data storage unit 21 and creates attribute pair data in which the attribute name A1 and the attribute value V1 are associated with each other from the attribute list L1, for example. Then, the attribute pair data creation unit 11 stores the created attribute pair data into the pair aggregate data storage unit 22. Note that the creation of the attribute pair data based on the attribute list can be done using the existing technique.

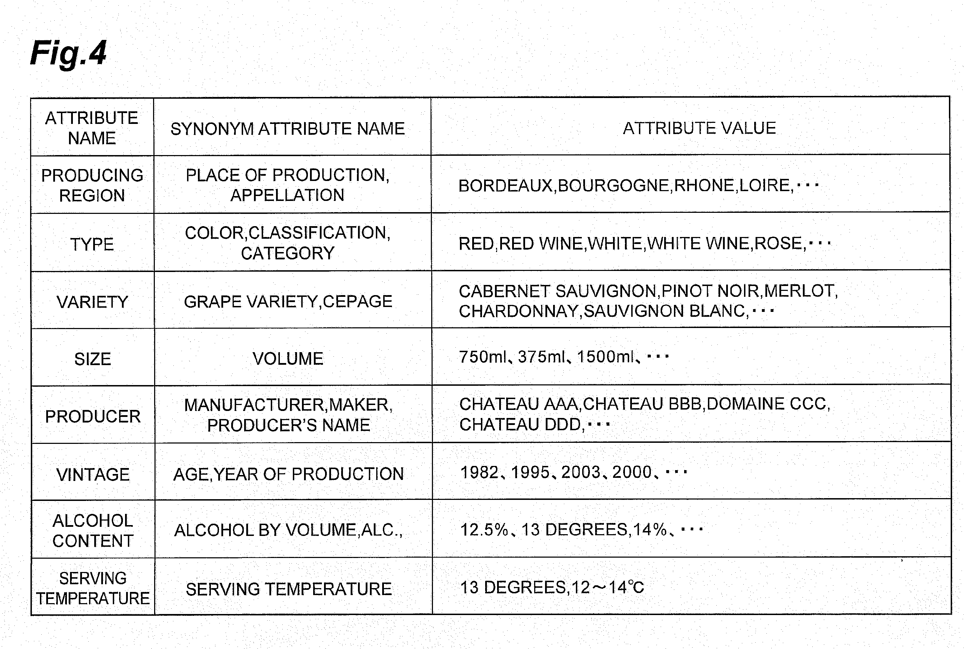

The pair aggregate data storage unit 22 is a storage means that stores pair aggregate data. The pair aggregate data contains a plurality of attribute pair data. Fig. 4 is a diagram showing a structure of the pair aggregate data storage unit 22 and an example of data stored therein. As shown in Fig. 4, the pair aggregate data storage unit 22 stores a plurality of attribute pair data in which an attribute name and an attribute value are associated with each other. In the example shown in Fig. 4, the attribute pair data having the same attribute name are collected in one row, and the attribute pair data such as "producing region, Bordeaux" and "producing region, Bourgogne" are collected in one row.

Further, the pair aggregate data can store a synonym attribute name in association with an attribute name. The synonym attribute name to be associated with an attribute name may be associated in advance by setting, for example. Accordingly, the attribute pair data such as "place of production, Rhone" can be also collectively included in the first row in the pair aggregate data.

The acquisition unit 12 is a part that acquires item page data containing description data and an attribute list from the item page data storage unit 21.

The adding unit 13 is a part that adds an attribute tag to an attribute value contained in description data of the item page data acquired by the acquisition unit 12. Further, the output unit 14 is a part that output the description data to which an attribute tag is added by the adding unit 13 as corpus data.

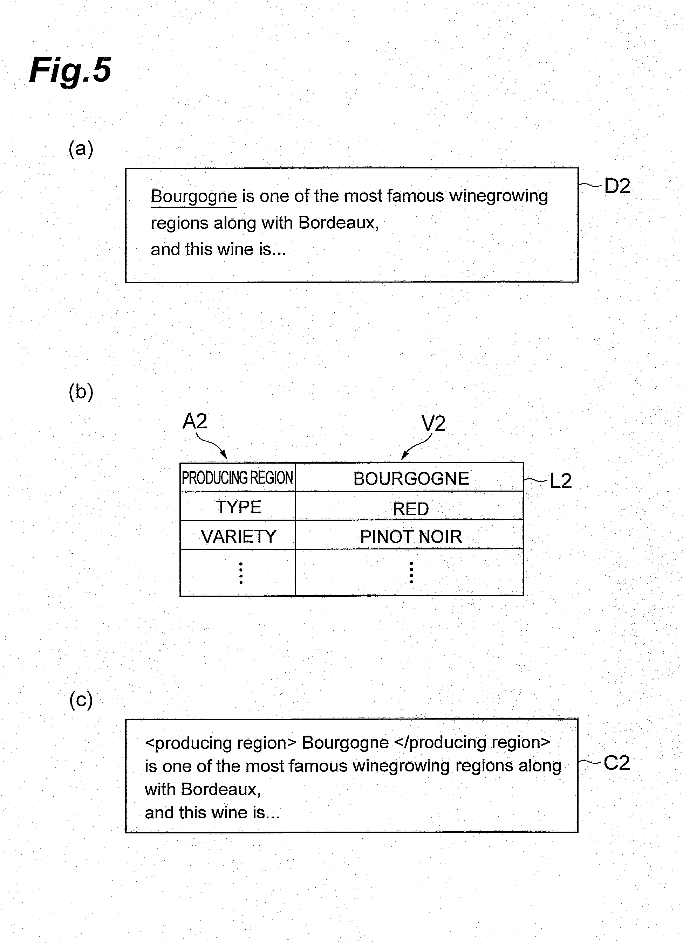

Examples of addition of an attribute tag by the adding unit 13 and output of corpus data by the output unit 14 are specifically described with reference to Fig. 5.

The adding unit 13 extracts an attribute value in attribute pair data contained in pair aggregate data from description data and, when the extracted attribute value is contained in an attribute list of the item page data as an attribute value of an attribute name associated in the attribute pair data, adds an attribute tag that identifies an attribute name to the attribute value.

Fig. 5(a) is a diagram showing description data D2 that is contained in item page data. Because "Bourgogne" is contained as an attribute value in the pair aggregate data shown in Fig. 4, the adding unit 13 extracts the attribute value "Bourgogne" from the description data D2.

Fig. 5(b) is a diagram showing an attribute list L2 that is contained in the same item page data as the description data D2. The attribute list L2 contains an attribute name A2 and an attribute value V2 in association with each other. When the adding unit 13 detects that the extracted attribute value "Bourgogne" is contained in the attribute list L2 as the attribute value V2 of the attribute name "producing region" associated in the attribute pair data (see Fig. 4), the adding unit 13 adds an attribute tag that identifies the attribute name "producing region" to the attribute value "Bourgogne".

Note that, in the case where an attribute name that is detected as the one with which the attribute value extracted from the description data is associated in the attribute pair data and to be associated in the attribute list corresponds to the synonym attribute name in the pair aggregate data, the adding unit 13 adds an attribute tag that identifies the attribute name associated with the synonym attribute name in the pair aggregate data to the attribute value.

Then, the output unit 14 outputs the description data D2 in which the attribute tag is added as corpus data to the corpus data storage unit 23. Fig. 5(c) is a diagram showing corpus data C2 that is output by the output unit 14. As shown in Fig. 5(c), in the corpus data C2, the attribute tag "<producing region>...</producing region>" that identifies the attribute name "producing region" is added to the attribute value "Bourgogne".

As described above with reference to Fig. 5, it is possible to appropriately add an attribute tag to an attribute value that indicates the features of an item in description data. Then, because the description data to which the attribute tag is added appropriately is output as corpus data, it is possible to save time and effort to create corpus data.

Although the adding unit 13 adds an attribute tag using the attribute pair data in the above description, an attribute tag may be added without using the attribute pair data. In this case, the adding unit 13 extracts an attribute value from an attribute list contained in the item page data acquired by the acquisition unit 12. Then, when the extracted attribute value is contained in description data in the item page data, the adding unit 13 can add an attribute tag that identifies an attribute name with which the attribute value is associated in the attribute list to the attribute value contained in the description data.

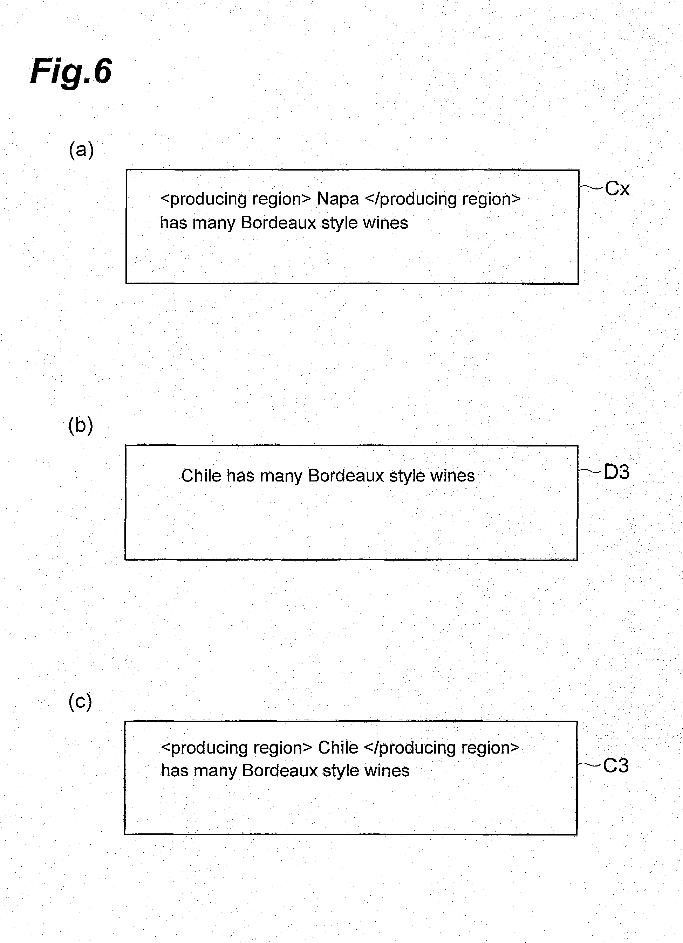

The corpus data storage unit 23 is a storage means that stores corpus data output by the output unit 14. The corpus data stored in the corpus data storage unit 23 can be used for machine learning in an analysis device that automatically creates an attribute list by using description data in item page data that does not contain an attribute list. For example, if corpus data $C_X$ as shown in Fig. 6(a) is machine-learned, the analysis device can recognize the position where the attribute value of "producing region" appears in the context.

After such corpus data $C_X$ is machine-learned, when the analysis device conducts analysis of description data D3 as shown in Fig. 6(b), the analysis device detects that "Chile" is an attribute value representing "producing region" from the structure and context of the sentence and can thereby create output data C3 in which the tag "<producing region>...</producing region>" is added to the "Chile" part as shown in Fig. 6(c). Then, the analysis device can create an attribute list in which the attribute name "producing region" and the attribute value "Chile" are associated with each other based on the output data C3. Accordingly, even if item page data in which the description data D3 is contained does not have an attribute list, the attribute list in which the attribute name "producing region" and the attribute value "Chile" are associated an be added to the item page data.

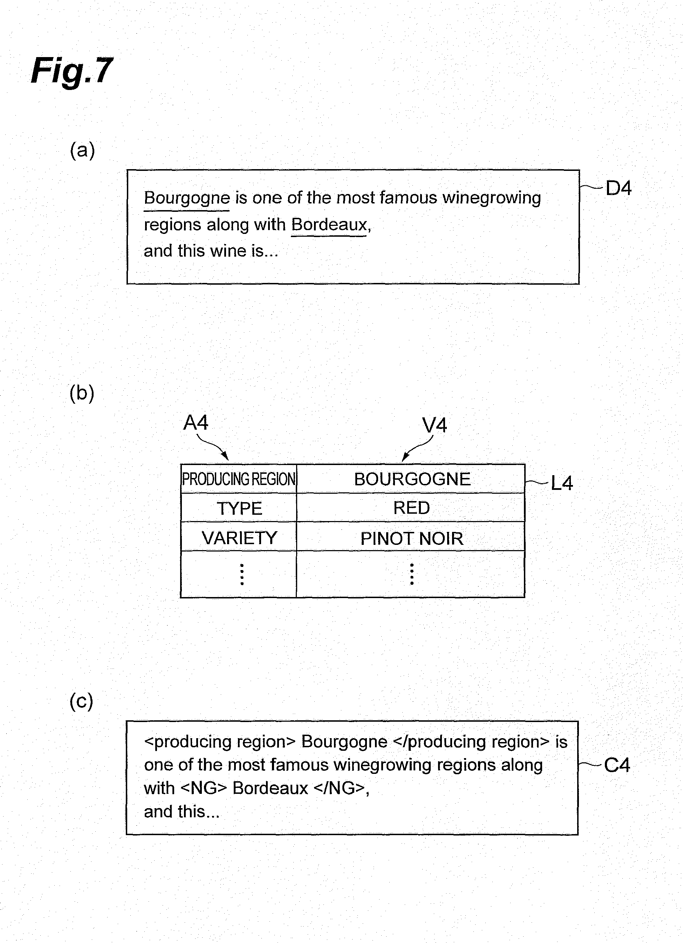

Hereinafter, variations in the processing of adding an attribute tag by the adding unit 13 and the processing of outputting corpus data by the output unit 14 are described with reference to Fig. 7 and subsequent figures.

The adding unit 13 extracts an attribute value in attribute pair data contained in pair aggregate data from description data, and when the extracted attribute value is not contained in an attribute list of the item page data as an attribute value of an attribute name associated in the attribute pair data and another attribute value different from the extracted attribute value is associated with the attribute name and contained in the attribute list, it can add a non-attribute tag indicating that the attribute value does not represent the attribute of the item to the extracted attribute value. An example of the processing of adding a non-attribute tag is specifically described with reference to Fig. 7.

Fig. 7(a) is a diagram showing an example of description data. The description data D4 shown in Fig. 7(a) contains the attribute values "Bourgogne" and "Bordeaux" in the attribute pair data contained in the pair aggregate data (see Fig. 4). Accordingly, the adding unit 13 extracts the attribute value "Bourgogne" and the attribute value "Bordeaux" from the description data D4. The attribute value "Bourgogne" and the attribute value "Bordeaux" are associated with the attribute name "producing region" in the attribute pair data.

Fig. 7(b) is a diagram showing the attribute list L4 in the item page data in which the description data D4 is contained. The attribute list L4 has an attribute list in which the attribute name "producing region" and the attribute value "Bourgogne" are associated with each other. In this case, because the attribute value "Bourgogne" extracted from the description data D4 is contained in the attribute list L4 as the attribute value of the attribute name "producing region" associated in the attribute pair data, the adding unit 13 adds the attribute tag "<producing region>...</producing region>" that identifies the attribute name "producing region" to the extracted attribute value "Bourgogne" as shown in the corpus data C4 shown in Fig. 7(c).

On the other hand, because the attribute value "Bordeaux" extracted from the description data D4 is not contained in the attribute list L4 as the attribute value of the attribute name "producing region" associated in the attribute pair data, and another attribute value "Bourgogne" different from the attribute value "Bordeaux" is associated with the attribute name "producing region" and contained in the attribute list L4, the adding unit 13 adds the non-attribute tag "<NG>...</NG>" indicating that the attribute value does not represent the attribute of the item to the extracted attribute value "Bordeaux".

It is thereby possible to create the corpus data that contains information indicating that the attribute value extracted from the description data is not appropriate as an attribute value indicating the features of the item. This enables creation of corpus data that is more effective as corpus data to be used for machine learning and the like.

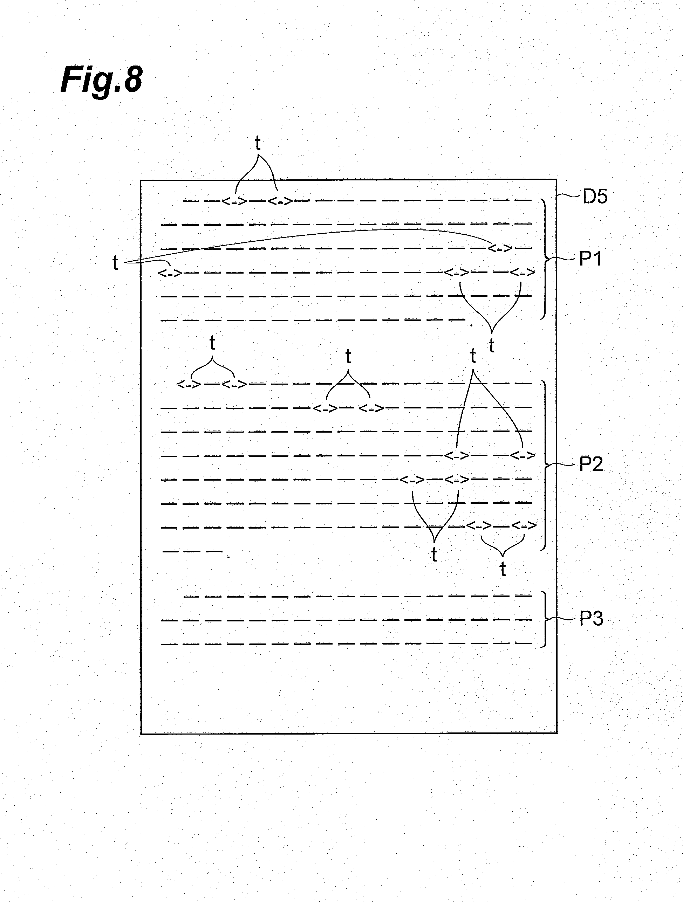

Fig. 8 is a diagram illustrating the output of corpus data by the output unit 14 in the case where description data in item page data includes a plurality of paragraphs.

In the case where description data in the item page data acquired by the acquisition unit 12 includes a plurality of paragraphs, the output unit 14 can output the description data in which the number of attribute tags added by the adding unit 13 is a specified number or more as the corpus data.

As shown in Fig. 8, when the description data D5 contains paragraphs P1, P2 and P3, the output unit 14 counts the number of attribute tags t in each paragraph. In the example of Fig. 8, because the paragraph P1 includes three attribute tags t, the paragraph P2 includes five attribute tags t, and the paragraph P3 includes no attribute tag t, in the case where a threshold for the number of attribute tags is preset to "three", for example, the output unit 14 outputs the description data of the paragraph P1 and the paragraphs P2 as the corpus data.

Further, in the case where description data in the item page data acquired by the acquisition unit 12 includes a plurality of paragraphs, the output unit 14 can output the description data in which the number of added attribute tags is the largest as the corpus data. In the example of Fig. 8, because the paragraph P2 includes the largest number of attribute tags t among the paragraphs P1, P2 and P3, the output unit 14 outputs the description data of the paragraphs P2 as the corpus data.

In the case where the description data includes a plurality of paragraphs, the paragraph in which many attribute tags are added is likely to include a sentence that appropriately describes the features of the item, and therefore outputting the corpus data in this manner can provide high quality corpus data.

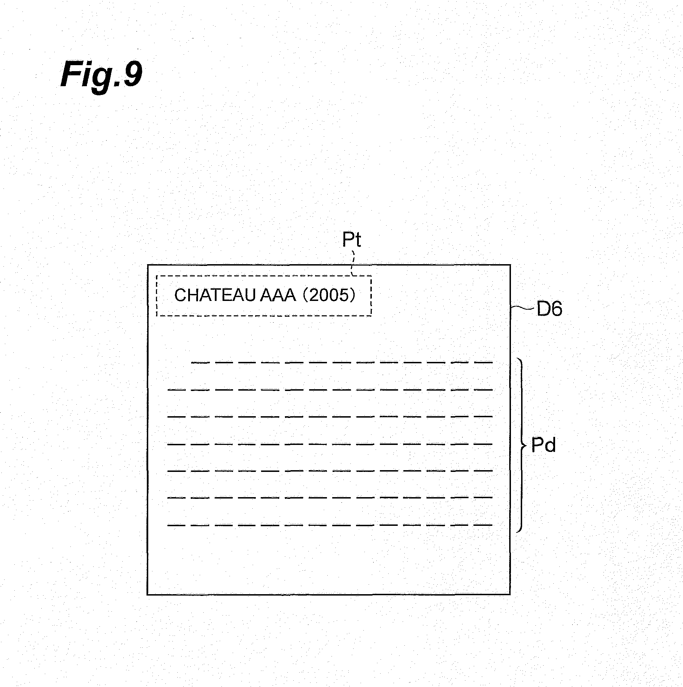

Fig. 9 is a diagram illustrating the output of corpus data by the output unit 14 in the case where description data in item page data includes a plurality of different sections (parts).

The output unit 14 can classify a plurality of parts included in description data in which an attribute tag is added into a plurality of groups according to a specified rule, and output a sentence of each group in which an attribute tag is added as the corpus data for the group.

The description data D6 shown in Fig. 9 includes a part $P_t$ and a part $P_d$. In this case, the output unit 14 classifies a plurality of parts included in the description data D6 according to a specified rule. To be specific, the output unit 14 performs morphological analysis of each of the parts included in the description data D6 and classifies those parts according to the result. To be more specific, the output unit 14 classifies each of the parts included in the description data D6 based on whether or not to include a specific part of speech such as a particle, for example. In the example shown in Fig. 9, because the part $P_t$ indicating the title of the item does not include a particle, the output unit 14 classifies the part $P_t$ into a group of not including a particle, and because the part $P_d$ that contains the description of the item includes a particle, the output unit 14 classifies the part $P_d$ into a group of including a particle. Then, the output unit 14 outputs a part of the description data in which an attribute tag is added in each group as the corpus data for each group.

In this manner, because a part (sentence) of description data is classified into a plurality of groups according to a specified rule such as a result of morphological analysis and corpus data is output for each group, the quality of corpus data to be used for machine learning and the like can be maintained. Specifically, in an analysis device that analyzes text by machine-learning corpus data, the accuracy of analysis is enhanced by using a group of corpus data according to an analysis target.

Although a part of the description data D6 is classified based on whether or not to include a particle in the above-described example, in the case where the description data is described in English, for example, it can be classified based on whether or not to include a verb or a preposition.

Further, in the case where the description data D6 includes a plurality of parts (sentences) as shown in Fig. 9, the adding unit 13 may perform morphological analysis of each of the plurality of parts included in the description data and add an attribute tag only to the part having a specified morphological analysis result. For example, the adding unit 13 can add an attribute tag only to the part $P_d$ that includes a particle. In this case, the output unit 14 outputs the part $P_d$ of the description data in which the attribute tag is added as the corpus data.

As described above, the description data related to an item contains both of a title part of the item and a text part or the like that describes the features of the item in some cases, and attribute values contained in the respective parts appear in different ways. In such a case also, because an attribute tag is added only to a sentence having specified characteristics in morphological analysis of the sentences of the description data, and the description data having the sentence in which the attribute tag is added is output as the corpus data as described above, the quality as the corpus data is maintained.

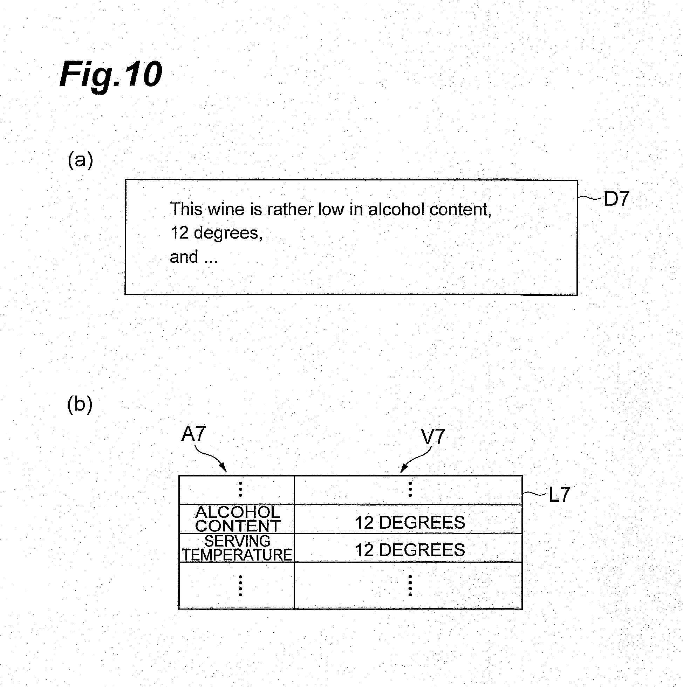

Fig. 10 is a diagram illustrating the case where the output unit 14 avoids outputting corpus data. In the case where an attribute value contained in description data in item page data appears in an attribute list of the item page data more than one time in association with different attribute names, the output unit 14 does not output the description data as the corpus data.

Fig. 10(a) is a diagram showing an example of description data acquired by the acquisition unit 12. The adding unit 13 extracts the attribute value "12 degrees" from the description data D7. Fig. 10(b) is a diagram showing an attribute list in the item page data in which the description data D7 is contained. The attribute list L7 includes "alcohol content", "serving temperature" and the like as the attribute name A7, and further includes "12 degrees" and "12 degrees" as the attribute value V7 in association with the respective attribute names. Note that the attribute value "12 degrees" extracted from the description data D7 appears more than one time in association with different attribute names "alcohol content" and "serving temperature" in the attribute list L7. In this case, the output unit 14 does not output the description data D7 as the corpus data.

In the case where an attribute value extracted from description data is associated with a plurality of different attribute names in an attribute list, an attribute name to be associated with the attribute value is unknown, and therefore an attribute tag for the attribute name is not added, so that the degradation of the quality of the corpus data is prevented.

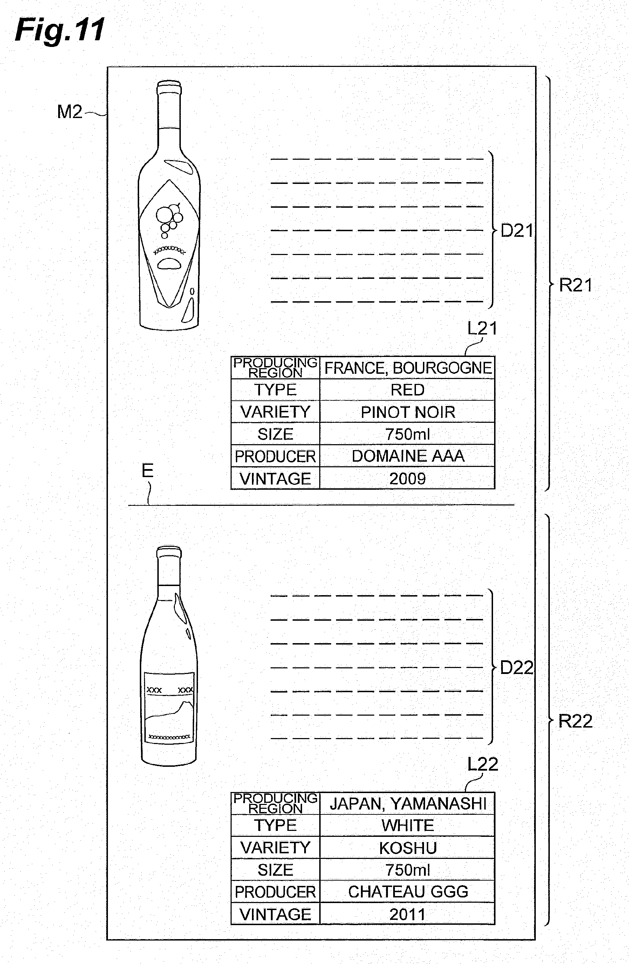

Fig. 11 is a diagram illustrating processing of adding an attribute tag in the case where information of a plurality of items is contained in one item page data. The item page data M2 shown in Fig. 11 contains information of two items, and it contains description data D21 and D22 and attribute lists L21 and L22 related to each of the items.

In this manner, in the case where the attribute lists L21 and L22 related to each of a plurality of items are contained in the item page data M2, the adding unit 13 can refrain from performing addition of an attribute tag to the description data. Because, in such a case, it is not easy to determine which of a plurality of items contained in the item page the extracted attribute value relates to and which attribute list is to be referred to in order to add an attribute tag, the degradation of the quality of the corpus data is prevented by not performing addition of an attribute tag to the description data. Note that the determination whether a plurality of attribute lists are contained in one item page data can be made by detecting whether a plurality of specified tabular form data are contained or not, for example, and such detection can be done using the existing technique.

Further, in the case where a plurality of attribute lists related to each of a plurality of items are contained in item page data, the adding unit 13 may detect a region where an attribute list and description data for each item are contained in the item page data based on description information for displaying the item page data, refers to the attribute list and the description data contained in the region in association as an attribute list and description data related to one item and then perform addition of an attribute tag to an attribute value contained in the description data.

This is specifically described using the example of Fig. 11. The adding unit 13 analyzes description information described in HTML, for example, for displaying the item page data M2 and extracts information indicating a boundary between items. In this example, the adding unit 13 extracts information for displaying a boundary line E from the description information of the item page data M2 and acquires information indicating the position of the boundary line E in the item page data M2. The adding unit 13 can thereby detect a region R21 and a region R22 divided by the boundary line E in the item page data M2. Then, because the adding unit 13 can recognize that the description data D21 and the attribute list L21 are included in the same region R21, it can perform addition of an attribute tag to the attribute value extracted from the description data D21 by referring to the attribute list L21. Further, because the adding unit 13 can recognize that the description data D22 and the attribute list L22 are included in the same region R22, it can perform addition of an attribute tag to the attribute value extracted from the description data D22 by referring to the attribute list L22.

As described above, even when information about a plurality of items is contained in one item page, an appropriate attribute list is referred to when adding an attribute tag to an attribute value extracted from description data, thereby preventing the degradation of the quality of the corpus data. Note that, although regions where information about a plurality of items is respectively contained are detected by detecting the boundary line E in the item page data M2 in the example of Fig. 11, the position at which information about a plurality of items is separated from each other may be recognized by detecting a blank region in the item page data M2, for example. Further, a tag tree structure of description information such as HTML, for example, for displaying the item page data M2 may be analyzed, and a description part having the same pattern may be detected as a region where information about one item is shown.

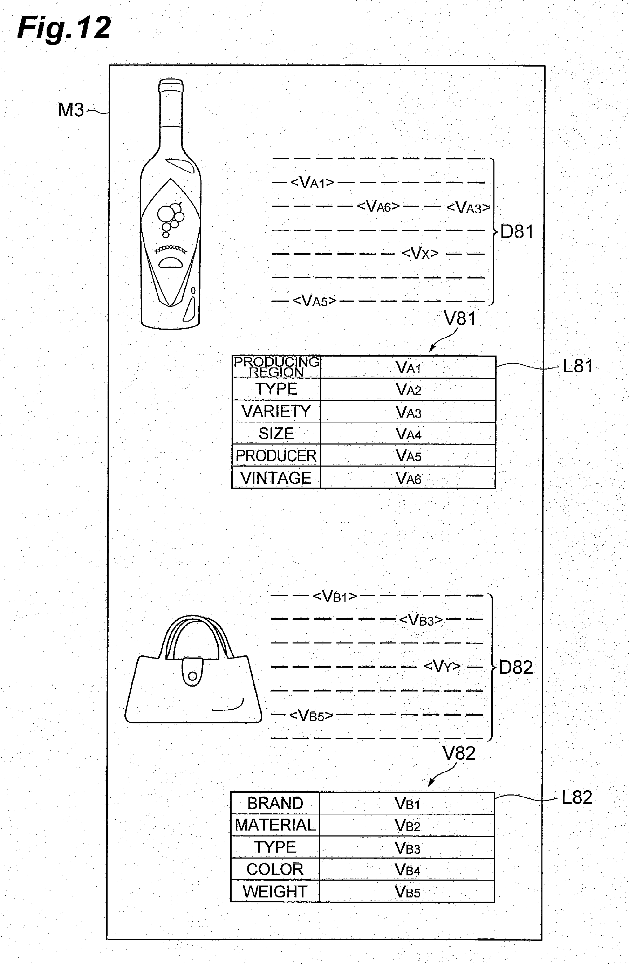

Fig. 12 is a diagram illustrating another example of processing of adding an attribute tag in the case where information of a plurality of items is contained in one item page data. The item page data M3 shown in Fig. 12 contains information about two items, and contains description data D81 and D82 and attribute lists L81 and L82 related to each of the items. Note that "V" in the description data D81 and D82 represents an attribute value detected using the pair aggregate data (see Fig. 4), for example.

In this manner, in the case where a plurality of attribute lists for a plurality of different items are contained in item page data, the adding unit 13 can specify a part (for example, a paragraph and sentence etc.) of description data where an attribute value contained in one attribute list appears with a specified frequency or more, refers to one attribute list and the specified part of the description data in association as an attribute list and description data for one item, and perform addition of an attribute tag to an attribute value contained in the description data.

This is specifically described by reference to Fig. 12. The adding unit 13 extracts one attribute list L81 from the item page data M3 and tries to detect description data where the attribute value V81 contained in the attribute list L81 appears. The attribute values "$V_{A1}$" to "$V_{A6}$" contained in the attribute list L81 are not contained at all in the description data D82. On the other hand, four attribute values "$V_{A1}$", "$V_{A6}$", "$V_{A3}$" and "$V_{A5}$", among the attribute values "$V_{A1}$" to "$V_{A6}$", are contained in the description data D81. For example, assuming that a threshold of the frequency that an attribute value appears in a part of the description data is present to "3", the adding unit 13 refers to the description data D81 in which four attribute values among the six attribute values "$V_{A1}$" to "$V_{A6}$" contained in the attribute list L81 are contained in association with the attribute list L81.

Further, the adding unit 13 extracts one attribute list L82 from the item page data M3 and tries to detect description data where the attribute value V82 contained in the attribute list L82 appears. The attribute values "$V_{B1}$" to "$V_{B5}$" contained in the attribute list L82 are not contained at all in the description data D81. On the other hand, three attribute values "$V_{B1}$", "$V_{B3}$" and "$V_{B5}$", among the attribute values "$V_{B1}$" to "$V_{B5}$", are contained in the description data D82. The adding unit 13 refers to the description data D82 in which three attribute values among the five attribute values "$V_{B1}$" to "$V_{B5}$" contained in the attribute list L82 are contained in association with the attribute list L82.

When adding an attribute tag to an attribute value, the attribute list and the description data associated in this manner are refereed to in combination. Accordingly, even in the case where a plurality of attribute lists related to items are contained in one item page data, the degradation of the quality of the corpus data is prevented.

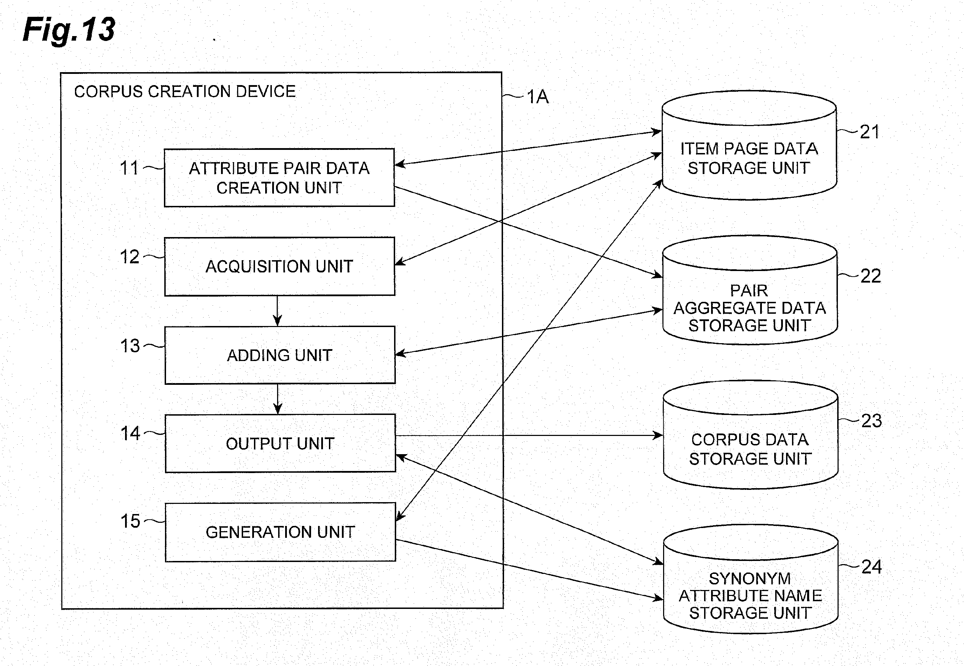

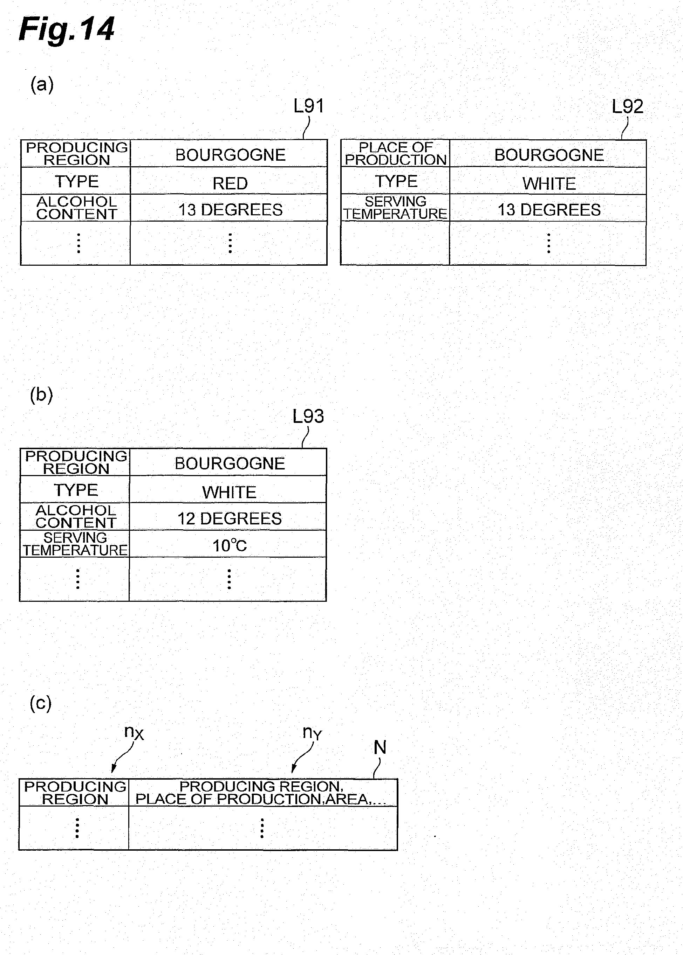

Another embodiment for a corpus creation device is described hereinafter with reference to Figs. 13 and 14. Fig. 13 is a block diagram showing a functional configuration of a corpus creation device 1A according to another embodiment. The corpus creation device 1A further includes a generation unit 15 (generation means) in addition to the functions units 11 to 14 included in the corpus creation device 1A shown in Fig. 1. Further, the output unit 14 and the generation unit 15 can access a synonym attribute name storage unit 24. The synonym attribute name storage unit 24 is a storage means that stores synonym attribute name information.

The generation unit 15 is a part that acquires a plurality of item page data containing attribute lists and, when a first attribute value in a first attribute list contained in first item page data among the acquired item page data and a second attribute value in a second attribute list contained in second item page data among the acquired item page data are the same, and item page data in which a first attribute name associated with the first attribute value and a second attribute name associated with the second attribute value are both contained in one attribute list does not exist among the plurality of item page data, generates synonym attribute name information where the first attribute name and the second attribute name are associated with each other.

Processing of generating synonym attribute name information is specifically described with reference to Fig. 14. The generation unit 15 acquires a plurality of item page data containing attribute lists where an attribute name and an attribute value related to an item are associated with each other from the item page data storage unit 21. Fig. 14(a) is a diagram showing a first attribute list L91 contained in first item page data and a second attribute list L92 contained in second item page data among the acquired item page data. Fig. 14(b) is a diagram showing an example of an attribute list contained in one item page data among a plurality of item page data different from the first and second item page data, which is item page data stored in the item page data storage unit 21.

When the first attribute value "Bourgogne" contained in the attribute list L91 and the second attribute value "Bourgogne" contained in the attribute list L92 are the same, and item page data in which the attribute name "producing region" associated with the first attribute value and the attribute name "place of production" associated with the second attribute value are both contained in one attribute list does not exist among the plurality of item page data, the generation unit 15 creates synonym attribute name information where the attribute name "producing region" and the attribute name "place of production" are associated with each other. Fig. 14(c) is a diagram showing an example of synonym attribute name information N. The synonym attribute name information N has the attribute name "producing region" and the attribute name "place of production" in association with each other in a field $n_Y$. The generation unit 15 stores the synonym attribute name information N into the synonym attribute name storage unit 24.

On the other hand, although the attribute list L91 and the attribute list L92 both contain the same attribute value "13 degrees", the attribute name "alcohol content" associated with the attribute value "13 degrees" in the attribute list L91 and the attribute name "serving temperature" associated with the attribute value "13 degrees" in the attribute list L92 are both contained in the attribute list L93, the generation unit 15 does not create information where the attribute name "alcohol content" and the attribute name "serving temperature" are associated with each other. Specifically, although there is a case where the same attribute value is associated with each of the attribute name "alcohol content" and the attribute name "serving temperature", those attribute names are not synonymous or quasi-synonymous. Accordingly, the generation unit 15 does not create synonym attribute name information where those attribute names are associated with each other.

The output unit 14 can set one attribute name among a plurality of attribute values associated with one another as the synonym attribute name information as a representative attribute name. A representative attribute name may be set by an indication from a user, or an attribute name that appears most frequently in the attribute list of the item page data stored in the item page data storage unit 21 may be set as a representative attribute name. In the example shown in Fig. 14(c), the output unit 14 sets the attribute name "producing region" as a representative attribute name in a field $n_X$. Then, the output unit 14 sets attribute names other than the representative attribute name of a plurality of attribute values associated with one another as the synonym attribute name information as synonym attribute names. In the example shown in Fig. 14(c), the attribute name "place of production" and the attribute name "area" are set as synonym attribute names.

Using the synonym attribute name information, the output unit 14 substitutes an attribute tag that identifies a representative attribute name for an attribute tag that identifies a synonym attribute name in the description data in which an attribute tag has been added by the adding unit 13 and outputs the description data as the corpus data. For example, the output unit 14 refers to the description data in which an attribute tag has been added by the adding unit 13, and when the attribute tag that identifies the attribute name "place of production" is added to the attribute value, the output unit 14 substitutes the attribute tag that identifies the attribute name "producing region" for the existing attribute tag. Then, the output unit 14 outputs the description data in which the attribute tag is substituted as the corpus data. By outputting the corpus data in this manner, the degradation of the quality of the corpus data caused by spelling variants of an attribute name is prevented.

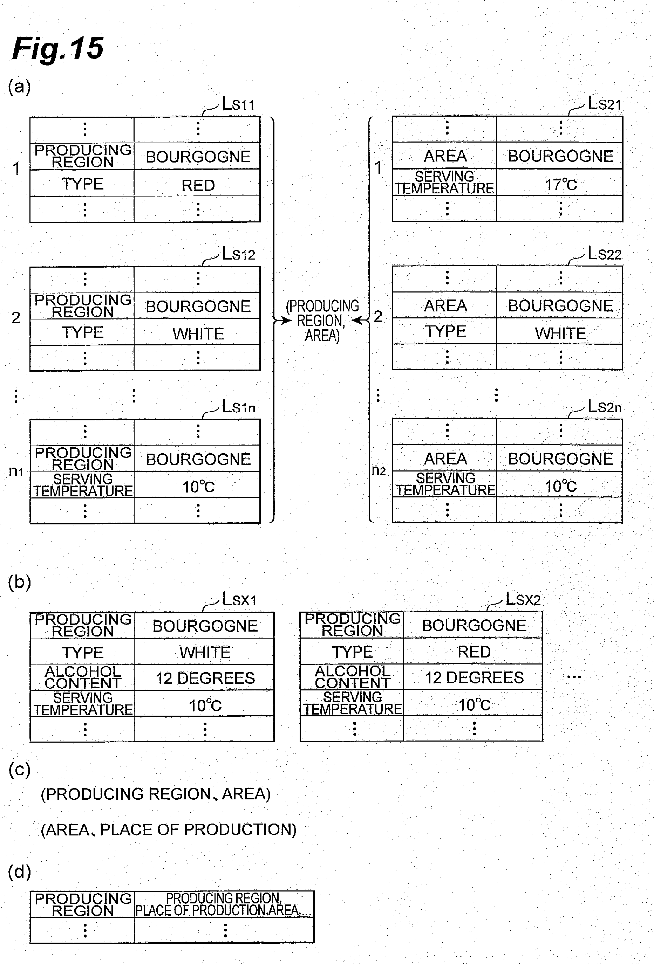

Another embodiment of processing of generating synonym attribute name information is described with reference to Fig. 15. In this embodiment, when, in a plurality of pairs of attribute names and attribute values that appear with a specified frequency or more in attribute lists contained in a plurality of item page data, a first attribute name and a second attribute name associated with the same attribute value are not contained in one attribute list of item page data, the generation unit 15 generates synonym attribute name information in which the first attribute name and the second attribute name are associated with each other.

To be specific, the generation unit 15 extracts attribute pair data that appear in attribute lists of item page data with a specified frequency N or more among the attribute pair data stored in the pair aggregate data storage unit 22. The specified frequency N is given by the equation $N=max(2,M_S/100)$, for example. In this equation, $M_S$ can be the number of shops that provide an attribute list included in item page data in a category of the item.

As shown in Fig. 15(a), when attribute pair data (producing region, Bourgogne) stored in the pair aggregate data storage unit 22 appears in attribute lists $L_{S11}$ to $L_{S1n}$ among the attribute lists contained in the acquired item page data and the frequency of appearance $n_1$ is a specified frequency N or more, the generation unit 15 extracts the attribute pair data (producing region, Bourgogne). Likewise, when attribute pair data (area, Bourgogne) appears in attribute lists $L_{S21}$ to $L_{S2n}$ among the attribute lists contained in the acquired item page data and the frequency of appearance $n_2$ is a specified frequency N or more, the generation unit 15 extracts the attribute pair data (area, Bourgogne).

Then, the generation unit 15 determines whether the attribute names associated with the same attribute value in the extracted attribute pair data are contained in one attribute list. To be specific, as shown in Fig. 15(a), when the attribute pair data (producing region, Bourgogne) and the attribute pair data (area, Bourgogne) are extracted, the generation unit 15 determines whether the attribute name "producing region" and the attribute name "area" associated with the same attribute value "Bourgogne" are contained in one attribute list. The generation unit 15 determines whether the attribute name "producing region" and the attribute name "area" are both contained in the attribute lists $L_{SX1}$, $L_{SX2}$, ... of the acquired item page data as shown in Fig. 15(b), for example. Then, when the attribute name "producing region" and the attribute name "area" are not both contained in one attribute list, the generation unit 15 generates synonym attribute name information in which the attribute name "producing region" and the attribute name "area" are associated with each other. Fig. 15(c) is a diagram showing an example of the synonym attribute name information. In the example of the synonym attribute name information shown in Fig. 15(c), the attribute name "producing region" and the attribute name "area", and the attribute name "area" and the attribute name "place of production" are associated with each other.

Further, the output unit 14 can merge a plurality of synonym attribute name information. To be specific, because the attribute name "producing region" is synonymous with the attribute name "area", and the attribute name "area" is synonymous with the attribute name "place of production", the output unit 14 merges the synonym attribute name information in which the attribute name "producing region" and the attribute name "area" are associated with each other and the synonym attribute name information in which the attribute name "area" and the attribute name "place of production" are associated with each other and generates information indicating that those attribute names are synonymous.

To be more specific, the output unit 14 can determine whether or not to merge the synonym attribute name information by representing the synonym attribute name information by vectors where the number of all extracted attribute names equals the number of dimensions and those attribute names are assigned to the respective dimensions and calculating the degree of similarity between the vectors. Specifically, assuming that the vectors representing the synonym attribute name information i, j is $v_i$, $v_j$, the output unit 14 calculates the degree of similarity between the vectors using cosine similarity $sim(v_i,v_j)=v_i \cdot v_j/|v_i||v_j|$, and merges the synonym attribute name information where the calculated value is 0.5 or above.

Fig. 15(d) shows the synonym attribute name information merged in this manner, and the attribute name "producing region" is set as a representative attribute name among the attribute name information such as producing region, place of production and area. Specifically, the output unit 14 sets one representative attribute name "producing region" and synonym attribute names "place of production" and "area", which are the attribute names other than the representative attribute name, based on specified conditions among a plurality of attribute names associated with one another in the merged synonym attribute name information. Then, the output unit 14 can substitute an attribute tag that identifies the representative attribute name for the attribute tags that identify the synonym attribute names in the description data in which the attribute tags have been added by the adding unit 13 and output the description data as the corpus data. By outputting the corpus data in this manner, the degradation of the quality of the corpus data caused by spelling variants of an attribute name is prevented.

An example of the case where the output unit 14 avoids outputting item page data containing an attribute value to which an attribute tag is added as corpus data is described hereinbelow. In this example, in consideration that an attribute tag added based on attribute pair data that is not frequently contained in an attribute list of item page data is likely to be incorrect, it is controlled not to output description data containing the attribute tag added based on such attribute pair data as corpus data. This control is based on the view that an attribute value that is not frequently contained in an attribute list is not frequently contained in description data.

For such control, the output unit 14 does not output description data in which one attribute value where the proportion of a value indicating the frequency that the one attribute value is contained in description data contained in a plurality of web page data to a value indicating the frequency that the one attribute value is contained in attribute lists contained in a plurality of web page data acquired by the acquisition unit 12 is a specified value or more is contained with an attribute tag as corpus data. The plurality of web page data acquired by the acquisition unit 12 may be all the web page data belonging to the category of a specified item or all the web page data stored in the item page data storage unit 21.

To be specific, assuming that the number of item page data where an attribute value v is contained in description data of the acquired item page data is $MF_D(v)$, the output unit 14 calculates $MF_D(v)/N_M$ as the frequency that the one attribute value is contained in the description data contained in a plurality of web page data. Note that $N_M$ is the number of shops selling an item in the category of the item.

Further, assuming that the number of item page data where an attribute value v is contained in an attribute list of the acquired item page data is $MF_S(v)$, the output unit 14 calculates $MF_S(v)/M_S$ as the frequency that the one attribute value is contained in attribute lists contained in a plurality of web page data. Note that $N_M$ is the number of shops providing an attribute list contained in item page data in the category of the item, and it may be regarded as the number of item page data containing an attribute list among item page data to be analyzed for corpus creation.

Then, the output unit 14 calculates Score(v) by the following equation.

$$Score(v) = (MF_D(v)/N_M)/(MF_S(v)/M_S)$$

The output unit 14 performs control so as not to output description data in which the attribute value v where the calculated Score(v) is a specified value or more is contained with an attribute tag as corpus data. The specified value for Score(v) in this control may be 30, for example.

By such control, the attribute value that is likely to be provided with an incorrect attribute tag is determined appropriately, and it is avoided to output description data containing an attribute value with such an attribute tag as corpus data. The degradation of the quality of the corpus data is thereby prevented.

Another example of the case where the output unit 14 avoids outputting item page data as corpus data is described hereinbelow. In this example, it is controlled not to output item page data containing an attribute value to which no attribute tag is added in spite of that an attribute tag should be added as corpus data.

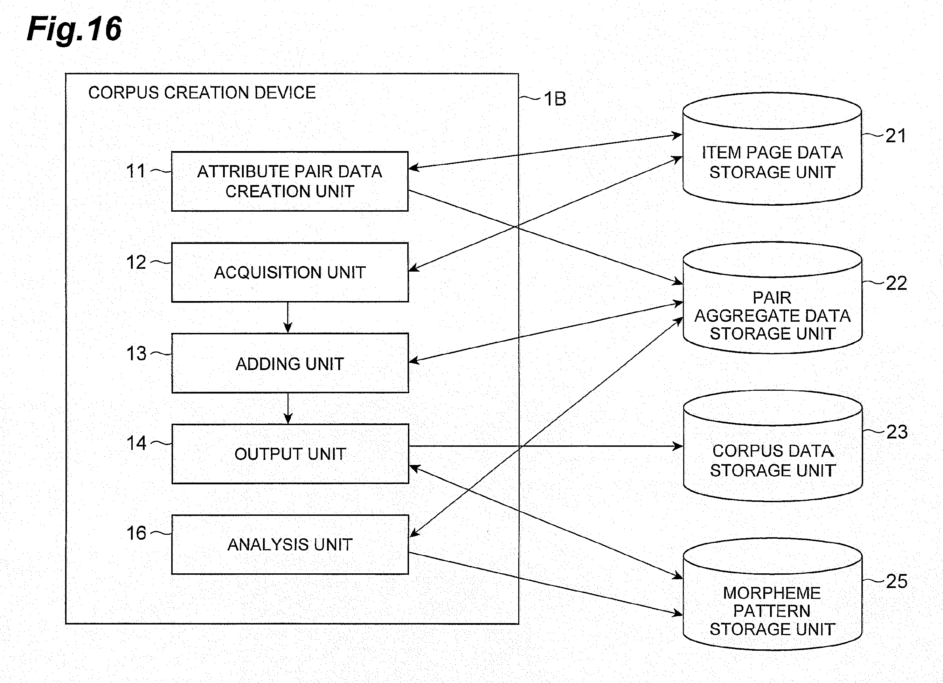

Fig. 16 shows a block diagram of a corpus creation device 1B according to this example. As shown in Fig. 16, the corpus creation device 1B further includes an analysis unit 16 (analysis means) in addition to the components of the corpus creation device 1 shown in Fig. 1.

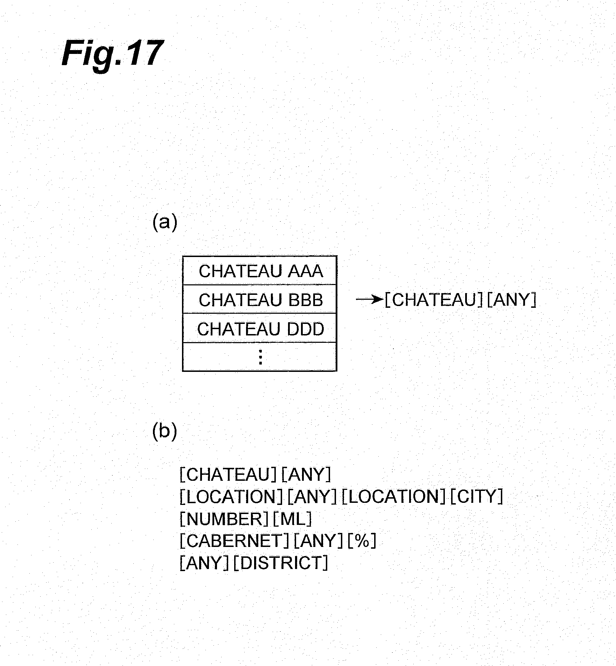

The analysis unit 16 analyzes a plurality of attribute values extracted from a plurality of web page data and extracts a form pattern of the attribute values. To be specific, the analysis unit 16 analyzes attribute values in the attribute pair data stored in the pair aggregate data storage unit and extracts a morpheme pattern. When extracting a pattern that appears frequently, a pattern extraction is performed after generalization of the obtained morpheme sequence by substituting a word where a part of speech is a place name with [LOCATION] and substituting a word with a numeral with [NUMBER]. The extraction of a frequently appearing pattern can be done efficiently using a known technique such as PrefixSpan algorithm, for example. Fig. 17(a) is a diagram showing an example of extraction of a morpheme pattern. As shown in Fig. 17(a), the analysis unit 16 extracts a morpheme pattern such as "[chateau•][any]" based on the attribute values such as "chateau•AAA", "chateau•BBB" and "chateau•DDD". Fig. 17(b) shows an example of a morpheme pattern. [ANY] in those morpheme patterns represents an arbitrary morpheme sequence. [ANY] can be contained inside a pattern, such as [Cabernet] [ANY] [%]". The analysis unit 16 stores the extracted morpheme pattern into a morpheme pattern storage unit 25.

The output unit 14 does not output description data containing an attribute value that matches the morpheme pattern stored in the morpheme pattern storage unit 25 and to which no attribute tag is added among description data in which an attribute tag is added as corpus data.

An attribute value to which an attribute tag should be added is thereby appropriate determined, and it is avoided to output description data where an attribute tag is not added to such an attribute value as corpus data, and therefore the degradation of the quality of the corpus data is prevented.

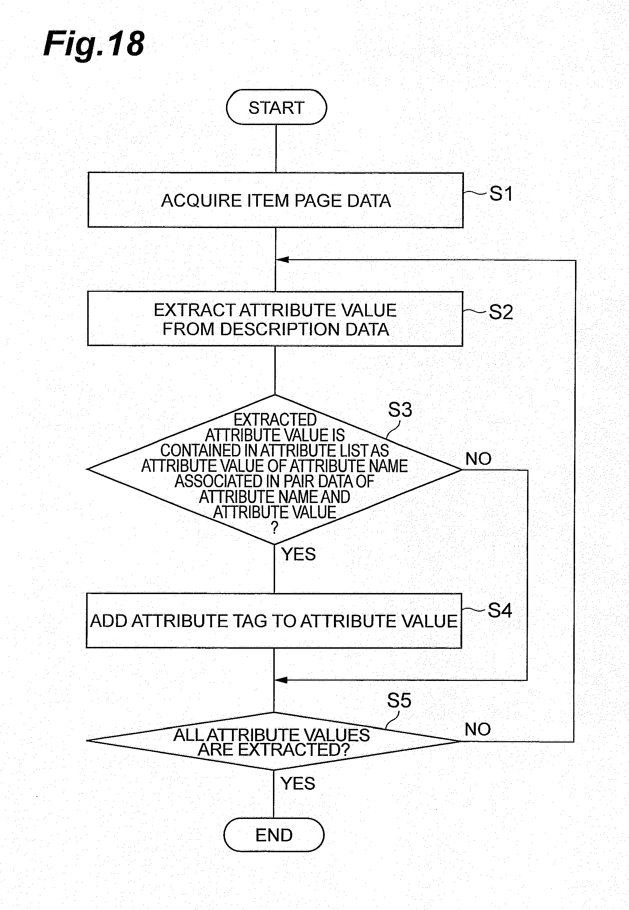

A corpus creation method according to this embodiment is described hereinafter with reference to Fig. 18. Fig. 18 is a flowchart showing an example of a process of a corpus creation method in the corpus creation device 1 shown in Fig. 1.

First, the acquisition unit 12 acquires item page data containing description data and an attribute list from the item page data storage unit 21 (S1). Next, the adding unit 13 extracts an attribute value in attribute pair data contained in pair aggregate data (see Fig. 4) from the description data (S2).

Then, the adding unit 13 determines whether the attribute value extracted in Step S2 is contained in the attribute list of the item page data as an attribute value of an attribute name associated in the attribute pair data. When it is determined that the extracted attribute is contained in the attribute list, the process proceeds to Step S4. On the other hand, it is not determined that the extracted attribute is contained in the attribute list, the process proceeds to Step S5.

In Step S4, the adding unit 13 adds an attribute tag that identifies the attribute name with which the attribute value is associated to the attribute value (S4). Then, it is determined whether all attribute values have been extracted from the description data, and when they have been extracted, the process ends. On the other hand, when they are not yet extracted, the process returns to Step S2.

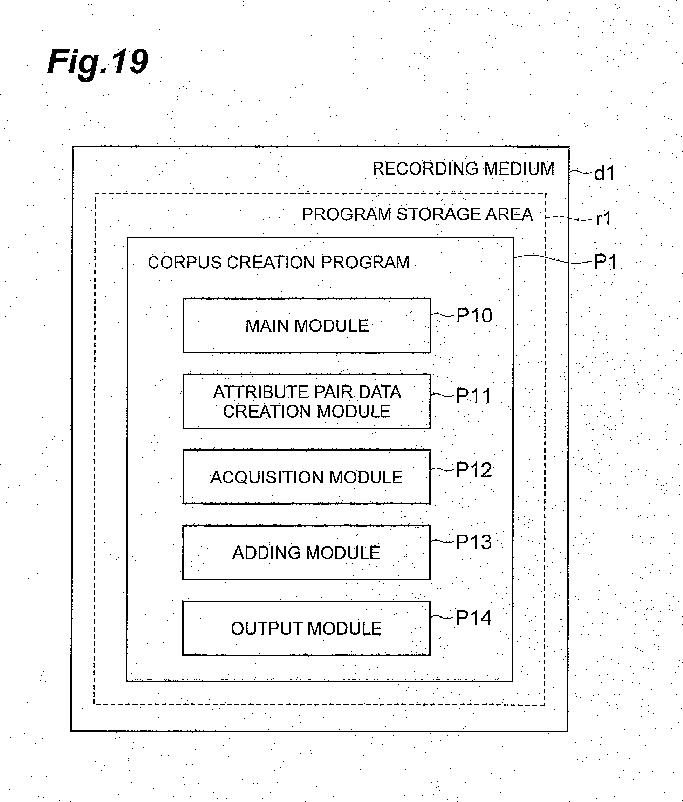

A corpus creation program that causes a computer to function as the corpus creation device 1 is described hereinafter with reference to Fig. 19. A corpus creation program p1 includes a main module P10, an attribute pair data creation module P11, an acquisition module P12, an adding module P 13 and an output module P 14.

The main module P10 is a part that exercises control over the corpus creation processing. The functions implemented by executing the attribute pair data creation module P11, the acquisition module P12, the adding module P 13 and the output module P 14 are equal to the functions of the attribute pair data creation unit 11, the acquisition unit 12, the adding unit 13 and the output unit 14, respectively.

The corpus creation program p1 is provided through a storage medium such as CD-ROM or DVD-ROM or semiconductor memory, for example. Further, the corpus creation program p1 may be provided as a computer data signal superimposed onto a carrier wave over a communication network.

In the corpus creation device 1, the corpus creation method and the corpus creation program according to this embodiment described above, when an attribute value extracted from description data related to an item based on pair aggregate data is contained in an attribute list of the item as an attribute value of an attribute name associated in attribute pair data, an attribute tag is added to the attribute value, and it is therefore possible to add the attribute tag appropriately to the attribute value that indicates the features of the item. Then, because the description data in which the attribute tag is added appropriately is output as corpus data, it is possible to save time and effort to create corpus data to be used for machine learning, for example.

Hereinbefore, the present invention has been described in detail with respect to the embodiment thereof. However, the present invention is not limited to the above-described embodiment. Various changes and modifications may be made therein without departing from the scope of the invention.

Reference Signs List

1,1A...corpus creation device, 11...attribute pair data creation unit, 12... acquisition unit, 13... adding unit, 14... output unit, 15...generation unit, 16...analysis unit, 21...item page data storage unit, 22...pair aggregate data storage unit, 23...corpus data storage unit, 24... synonym attribute name storage unit, 25...morpheme pattern storage unit, d1...storage medium, p1...corpus creation program, P10...main module, P11...attribute pair data creation module, P 12... acquisition module, P13...adding module, P 14... output module

**Claims**

1. A corpus creation device comprising:

   an acquisition means configured to acquire web page data containing description data related to a presented object presented on a web page and an attribute list where an attribute name and an attribute value related to the presented object are associated with each other;
   an adding means configured to, when an attribute value in an attribute list contained in web page data acquired by the acquisition means is contained in description data contained in the web page data, add an attribute tag identifying an attribute name with which the attribute value is associated in the attribute list to the attribute value contained in the description data; and
   an output means configured to output description data in which an attribute tag is added by the adding means as corpus data.

2. The corpus creation device according to Claim 1, wherein
   the adding means refers to pair aggregate data containing a plurality of attribute pair data where an attribute name and an attribute value related to the presented object are associated with each other and further containing a synonym attribute name synonymous with one attribute name in association with the one attribute name, extracts an attribute value in attribute pair data contained in the pair aggregate data from description data contained in the web page data, and when the extracted attribute value is contained in an attribute list of the web page data as an attribute value of the one attribute name or a synonym attribute name of the one attribute name associated in the attribute pair data, adds an attribute tag identifying the one attribute name to the attribute value.

3. The corpus creation device according to Claim 2, wherein
the adding means extracts an attribute value in attribute pair data contained in the pair aggregate data from the description data, and when the extracted attribute value is not contained in an attribute list of the web page data as an attribute value of an attribute name associated in the attribute pair data and another attribute value different from the extracted attribute value is contained in the attribute list in association with the attribute name, adds a non-attribute tag indicating that the attribute value does not represent an attribute of the presented object to the extracted attribute value.

4. The corpus creation device according to any one of Claims 1 to 3, wherein
when description data of web page data acquired by the acquisition means includes a plurality of paragraphs, the output means outputs description data where the number of added attribute tags is a specified number of more as corpus data.

5. The corpus creation device according to any one of Claims 1 to 3, wherein
when description data of web page data acquired by the acquisition means includes a plurality of paragraphs, the output means outputs description data where the number of added attribute tags is largest as corpus data.

6. The corpus creation device according to any one of Claims 1 to 5, wherein
the output means classifies a plurality of parts included in description data in which the attribute tag is added into a plurality of groups according to a specified rule, and outputs a part of each group in which the attribute tag is added as corpus data for each group.

7. The corpus creation device according to Claim 6, wherein
the output means performs morpheme analysis on a plurality of parts included in description data in which the attribute tag is added, and classifies the plurality of parts into a plurality of groups according to a specified morpheme analysis result.

8. The corpus creation device according to any one of Claims 1 to 5, wherein
the adding means performs morpheme analysis on each of a plurality of parts included in the description data, and adds the attribute tag to a part having a specified morpheme analysis result.

9. The corpus creation device according to any one of Claims 1 to 8, wherein
when an attribute value contained in the description data of the web page data appears in an attribute list of the web page data more than one time in association with different attribute names, the output means does not output the description data as corpus data.

10. The corpus creation device according to any one of Claims 1 to 9, wherein
when a plurality of attribute lists respectively related to a plurality of presented objects are contained in web page data acquired by the acquisition means, the adding means does not perform addition of an attribute tag to description data.

11. The corpus creation device according to any one of Claims 1 to 9, wherein
when a plurality of attribute lists respectively related to a plurality of presented objects are contained in web page data acquired by the acquisition means, the adding means detects a region where the attribute list and the description data for each presented object are included in the web page data based on description information for displaying web page data, refers to the attribute list and the description data included in the region in association as an attribute list and description data related to one presented object, and performs addition of an attribute tag to an attribute value contained in description data.

12. The corpus creation device according to any one of Claims 1 to 9, wherein
when a plurality of attribute lists respectively related to a plurality of presented objects are contained in web page data acquired by the acquisition means, the adding means specifies a part of description data where an attribute value contained in one attribute list appears with a specified frequency or more among description data contained in the web page data, refers to the one attribute list and the specified part of the description data in association as an attribute list and description data related to one presented object, and performs addition of an attribute tag to an attribute value contained in description data.

**13.** The corpus creation device according to any one of Claims 1 to 12, further comprising:

a generation means configured to acquire a plurality of web page data containing attribute lists where an attribute name and an attribute value related to a presented object are associated with each other, and when a first attribute value in a first attribute list contained in first web page data among the acquired web page data and a second attribute value in a second attribute list contained in second web page data among the acquired web page data are the same, and web page data in which a first attribute name associated with the first attribute value and a second attribute name associated with the second attribute value are both contained in one attribute list does not exist among the plurality of web page data, generate synonym attribute name information where the first attribute name and the second attribute name are associated with each other, wherein

the output means sets one representative attribute name and a synonym attribute name being an attribute name other than the representative attribute name based on specified conditions among a plurality of attribute names associated with one another using synonym attribute name information generated by the generation means, substitutes an attribute tag identifying the representative attribute name for an attribute tag identifying the synonym attribute name in description data in which an attribute tag has been added by the adding means, and outputs the description data as corpus data.

**14.** The corpus creation device according to any one of Claims 1 to 12, further comprising:

a generation means configured to, when a first attribute name and a second attribute name associated with the same attribute value in a plurality of pairs of attribute names and attribute values appearing with a specified frequency or more in attribute lists contained in a plurality of web page data acquired by the acquisition means are not contained in one attribute list, generate synonym attribute name information where the first attribute name and the second attribute name are associated with each other, wherein

the output means sets one representative attribute name and a synonym attribute name being an attribute name other than the representative attribute name based on specified conditions among a plurality of attribute names associated with one another using synonym attribute name information generated by the generation means, substitutes an attribute tag identifying the representative attribute name for an attribute tag identifying the synonym attribute name in description data in which an attribute tag is added by the adding means, and outputs the description data as corpus data.

**15.** The corpus creation device according to any one of Claims 1 to 14, wherein

the output means does not output description data as corpus data in which one attribute value where a proportion of a value indicating a frequency that the one attribute value is contained in description data contained in a plurality of web page data acquired by the acquisition means to a value indicating a frequency that the one attribute value is contained in attribute lists contained in the plurality of web page data is a specified value or more is contained with an attribute tag.

**16.** The corpus creation device according to any one of Claims 1 to 15, further comprising:

an analysis means configured to analyze a plurality of attribute values extracted from a plurality of web page data and extract a form pattern of the attribute values, wherein

the output means does not output description data containing an attribute value matching the form pattern and to which an attribute tag is not added by the adding means as corpus data.

**17.** A corpus creation method in a corpus creation device for creating corpus data, the method comprising:

an acquisition step of acquiring web page data containing description data related to a presented object presented on a web page and an attribute list where an attribute name and an attribute value related to the presented object are associated with each other;

an adding step of, when an attribute value in an attribute list contained in web page data acquired in the acquisition step is contained in description data contained in the web page data, adding an attribute tag identifying an attribute name with which the attribute value is associated in the attribute list to the attribute value contained in the description data; and

an output step of outputting description data in which an attribute tag is added in the adding step as corpus data.

**18.** A corpus creation program causing a computer to function as a corpus creation device for creating corpus data, the program causing the computer to implement:

an acquisition function to acquire web page data containing description data related to a presented object presented on a web page and an attribute list where an attribute name and an attribute value related to the presented object are associated with each other;

an adding function to, when an attribute value in an attribute list contained in web page data acquired by the acquisition function is contained in description data contained in the web page data, add an attribute tag identifying an attribute name with which the attribute value is associated in the attribute list to the attribute value contained in the description data; and

an output function to output description data in which an attribute tag is added by the adding function as corpus data.

## Fig.1

EP 2 916 238 A1

# Fig.2

1

| | |
|---|---|
| 101 | CPU |
| 102 | MAIN STORAGE DEVICE |
| 103 | AUXILIARY STORAGE DEVICE |
| 104 | COMMUNICATION CONTROL DEVICE |
| 105 | INPUT DEVICE |
| 106 | OUTPUT DEVICE |

# Fig.3

| PRODUCING REGION | FRANCE, BOURGOGNE |
|---|---|
| TYPE | RED |
| VARIETY | PINOT NOIR |
| SIZE | 750ml |
| PRODUCER | DOMAINE AAA |
| VINTAGE | 2009 |

## Fig.4

| ATTRIBUTE NAME | SYNONYM ATTRIBUTE NAME | ATTRIBUTE VALUE |
|---|---|---|
| PRODUCING REGION | PLACE OF PRODUCTION, APPELLATION | BORDEAUX,BOURGOGNE,RHONE,LOIRE,··· |
| TYPE | COLOR,CLASSIFICATION, CATEGORY | RED,RED WINE,WHITE,WHITE WINE,ROSE,··· |
| VARIETY | GRAPE VARIETY,CEPAGE | CABERNET SAUVIGNON,PINOT NOIR,MERLOT, CHARDONNAY,SAUVIGNON BLANC,··· |
| SIZE | VOLUME | 750ml、375ml、1500ml、··· |
| PRODUCER | MANUFACTURER,MAKER, PRODUCER'S NAME | CHATEAU AAA,CHATEAU BBB,DOMAINE CCC, CHATEAU DDD,··· |
| VINTAGE | AGE,YEAR OF PRODUCTION | 1982、1995、2003、2000、··· |
| ALCOHOL CONTENT | ALCOHOL BY VOLUME,ALC., | 12.5%、13 DEGREES,14%、··· |
| SERVING TEMPERATURE | SERVING TEMPERATURE | 13 DEGREES,12～14℃ |

EP 2 916 238 A1

# Fig.5

(a)

Bourgogne is one of the most famous winegrowing
regions along with Bordeaux,
and this wine is...                                                       ~D2

(b)

A2                                          V2

| PRODUCING REGION | BOURGOGNE | ~L2 |
|---|---|---|
| TYPE | RED | |
| VARIETY | PINOT NOIR | |
| ⋮ | ⋮ | |

(c)

<producing region> Bourgogne </producing region>
is one of the most famous winegrowing regions along      ~C2
with Bordeaux,
and this wine is...

# Fig.6

(a)

<producing region> Napa </producing region>
has many Bordeaux style wines ⎤~Cx

(b)

Chile has many Bordeaux style wines ⎤~D3

(c)

<producing region> Chile </producing region>
has many Bordeaux style wines ⎤~C3

# *Fig.7*

(a)

> Bourgogne is one of the most famous winegrowing
> regions along with Bordeaux,
> and this wine is...

~D4

(b)

A4                          V4

| PRODUCING REGION | BOURGOGNE |
|---|---|
| TYPE | RED |
| VARIETY | PINOT NOIR |
| ⋮ | ⋮ |

~L4

(c)

> <producing region> Bourgogne </producing region> is
> one of the most famous winegrowing regions along
> with <NG> Bordeaux </NG>,
> and this...

~C4

# Fig.8

## Fig.9

Pt

CHATEAU AAA (2005)

D6

Pd

# Fig.10

(a)

This wine is rather low in alcohol content,
12 degrees,
and ...

~D7

(b)

A7

V7

| ⋮ | ⋮ |
|---|---|
| ALCOHOL CONTENT | 12 DEGREES |
| SERVING TEMPERATURE | 12 DEGREES |
| ⋮ | ⋮ |

~L7

## Fig.11

**R21 / D21 / L21:**

| PRODUCING REGION | FRANCE, BOURGOGNE |
|---|---|
| TYPE | RED |
| VARIETY | PINOT NOIR |
| SIZE | 750ml |
| PRODUCER | DOMAINE AAA |
| VINTAGE | 2009 |

**R22 / D22 / L22:**

| PRODUCING REGION | JAPAN, YAMANASHI |
|---|---|
| TYPE | WHITE |
| VARIETY | KOSHU |
| SIZE | 750ml |
| PRODUCER | CHATEAU GGG |
| VINTAGE | 2011 |

# *Fig.12*

M3

— <V$_{A1}$> — — — — — — —
— — — — — <V$_{A6}$> — — <V$_{A3}$>
— — — — — — — — — — — } D81
— — — — — <V$_X$> — —
— — — — — — — — — —
— <V$_{A5}$> — — — — — —

V81

| PRODUCING REGION | V$_{A1}$ | L81 |
|---|---|---|
| TYPE | V$_{A2}$ | |
| VARIETY | V$_{A3}$ | |
| SIZE | V$_{A4}$ | |
| PRODUCER | V$_{A5}$ | |
| VINTAGE | V$_{A6}$ | |

— — <V$_{B1}$> — — — — — —
— — — — — — <V$_{B3}$> — —
— — — — — — — — — —
— — — — — — <V$_Y$> — — } D82
— — — — — — — — — —
— <V$_{B5}$> — — — — — —
— — — — — — — — — —

V82

| BRAND | V$_{B1}$ | L82 |
|---|---|---|
| MATERIAL | V$_{B2}$ | |
| TYPE | V$_{B3}$ | |
| COLOR | V$_{B4}$ | |
| WEIGHT | V$_{B5}$ | |

**Fig.13**

CORPUS CREATION DEVICE ~1A

11~ ATTRIBUTE PAIR DATA CREATION UNIT

12~ ACQUISITION UNIT

13~ ADDING UNIT

14~ OUTPUT UNIT

15~ GENERATION UNIT

21 ITEM PAGE DATA STORAGE UNIT

22 PAIR AGGREGATE DATA STORAGE UNIT

23 CORPUS DATA STORAGE UNIT

24 SYNONYM ATTRIBUTE NAME STORAGE UNIT

# Fig.14

(a)

L91

| PRODUCING REGION | BOURGOGNE |
|---|---|
| TYPE | RED |
| ALCOHOL CONTENT | 13 DEGREES |
| ⋮ | ⋮ |

L92

| PLACE OF PRODUCTION | BOURGOGNE |
|---|---|
| TYPE | WHITE |
| SERVING TEMPERATURE | 13 DEGREES |
| ⋮ | ⋮ |

(b)

L93

| PRODUCING REGION | BOURGOGNE |
|---|---|
| TYPE | WHITE |
| ALCOHOL CONTENT | 12 DEGREES |
| SERVING TEMPERATURE | 10°C |
| ⋮ | ⋮ |

(c)

$n_X$          $n_Y$          N

| PRODUCING REGION | PRODUCING REGION, PLACE OF PRODUCTION, AREA,... |
|---|---|
| ⋮ | ⋮ |

# Fig.15

(a)

|  | | Ls11 |
|---|---|---|
|  | ⋮ | ⋮ |
| 1 | PRODUCING REGION | BOURGOGNE |
|  | TYPE | RED |
|  | ⋮ | ⋮ |

|  | | Ls12 |
|---|---|---|
|  | ⋮ | ⋮ |
| 2 | PRODUCING REGION | BOURGOGNE |
|  | TYPE | WHITE |
|  | ⋮ | ⋮ |

⋮

|  | | Ls1n |
|---|---|---|
|  | ⋮ | ⋮ |
| n1 | PRODUCING REGION | BOURGOGNE |
|  | SERVING TEMPERATURE | 10°C |
|  | ⋮ | ⋮ |

(PRODUCING REGION, AREA)

|  | | Ls21 |
|---|---|---|
|  | ⋮ | ⋮ |
| 1 | AREA | BOURGOGNE |
|  | SERVING TEMPERATURE | 17°C |
|  | ⋮ | ⋮ |

|  | | Ls22 |
|---|---|---|
|  | ⋮ | ⋮ |
| 2 | AREA | BOURGOGNE |
|  | TYPE | WHITE |
|  | ⋮ | ⋮ |

⋮

|  | | Ls2n |
|---|---|---|
|  | ⋮ | ⋮ |
| n2 | AREA | BOURGOGNE |
|  | SERVING TEMPERATURE | 10°C |
|  | ⋮ | ⋮ |

(b)

| | Lsx1 |
|---|---|
| PRODUCING REGION | BOURGOGNE |
| TYPE | WHITE |
| ALCOHOL CONTENT | 12 DEGREES |
| SERVING TEMPERATURE | 10°C |
| ⋮ | ⋮ |

| | Lsx2 |
|---|---|
| PRODUCING REGION | BOURGOGNE |
| TYPE | RED |
| ALCOHOL CONTENT | 12 DEGREES |
| SERVING TEMPERATURE | 10°C |
| ⋮ | ⋮ |

⋯

(c)

(PRODUCING REGION、AREA)

(AREA、PLACE OF PRODUCTION)

(d)

| PRODUCING REGION | PRODUCING REGION, PLACE OF PRODUCTION,AREA,... |
|---|---|
| ⋮ | ⋮ |

# Fig.16

CORPUS CREATION DEVICE ~1B

11~ ATTRIBUTE PAIR DATA CREATION UNIT

12~ ACQUISITION UNIT

13~ ADDING UNIT

14~ OUTPUT UNIT

16~ ANALYSIS UNIT

ITEM PAGE DATA STORAGE UNIT ~21

PAIR AGGREGATE DATA STORAGE UNIT ~22

CORPUS DATA STORAGE UNIT ~23

MORPHEME PATTERN STORAGE UNIT ~25

EP 2 916 238 A1

# Fig.17

(a)

| CHATEAU AAA |
|---|
| CHATEAU BBB |
| CHATEAU DDD |
| ⋮ |

→ [CHATEAU][ANY]

(b)

[CHATEAU][ANY]
[LOCATION][ANY][LOCATION][CITY]
[NUMBER][ML]
[CABERNET][ANY][%]
[ANY][DISTRICT]

# Fig.18

```
           ┌─────────────┐
           │    START    │
           └──────┬──────┘
                  │
    ┌─────────────▼─────────────┐
    │   ACQUIRE ITEM PAGE DATA  │──S1
    └─────────────┬─────────────┘
                  │◄──────────────────────┐
    ┌─────────────▼─────────────┐         │
    │    EXTRACT ATTRIBUTE VALUE│──S2     │
    │    FROM DESCRIPTION DATA   │         │
    └─────────────┬─────────────┘         │
                  │                        │
              ╱───▼───╲  S3               │
         ╱ EXTRACTED       ╲              │
       ╱ ATTRIBUTE VALUE IS  ╲            │
      ╱ CONTAINED IN ATTRIBUTE LIST AS╲   │
     ╱ ATTRIBUTE VALUE OF ATTRIBUTE NAME╲─────NO──┐
     ╲  ASSOCIATED IN PAIR DATA OF     ╱          │
      ╲  ATTRIBUTE NAME AND           ╱           │
        ╲  ATTRIBUTE VALUE          ╱             │
          ╲        ?              ╱               │
              ╲───┬───╱                           │
                  │ YES                           │
    ┌─────────────▼──────────────────┐           │
    │ADD ATTRIBUTE TAG TO ATTRIBUTE VALUE│──S4   │
    └─────────────┬──────────────────┘           │
                  │◄────────────────────────────┘
              ╱───▼───╲  S5
         ╱ ALL ATTRIBUTE VALUES ╲────NO──┐
         ╲ ARE EXTRACTED?       ╱        │
              ╲───┬───╱                  │
                  │ YES                  │
           ┌──────▼──────┐              (to S2)
           │     END     │
           └─────────────┘
```

# Fig.19

RECORDING MEDIUM ⸏d1

PROGRAM STORAGE AREA ⸏r1

CORPUS CREATION PROGRAM ⸏P1

MAIN MODULE ⸏P10

ATTRIBUTE PAIR DATA CREATION MODULE ⸏P11

ACQUISITION MODULE ⸏P12

ADDING MODULE ⸏P13

OUTPUT MODULE ⸏P14

EP 2 916 238 A1

# INTERNATIONAL SEARCH REPORT

| | International application No. |
|---|---|
| | PCT/JP2013/056345 |

**A. CLASSIFICATION OF SUBJECT MATTER**
*G06F17/30*(2006.01)i, *G06F17/27*(2006.01)i

According to International Patent Classification (IPC) or to both national classification and IPC

**B. FIELDS SEARCHED**

Minimum documentation searched (classification system followed by classification symbols)
G06F17/30, G06F17/27

Documentation searched other than minimum documentation to the extent that such documents are included in the fields searched
Jitsuyo Shinan Koho       1922-1996   Jitsuyo Shinan Toroku Koho   1996-2013
Kokai Jitsuyo Shinan Koho  1971-2013   Toroku Jitsuyo Shinan Koho   1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-094855 A  (Toshiba Corp.),<br>12 April 2007 (12.04.2007),<br>entire text; all drawings<br>(Family: none) | 1-18 |
| A | JP 2009-026195 A  (Yokohama National University),<br>05 February 2009 (05.02.2009),<br>entire text; all drawings<br>(Family: none) | 1-18 |
| A | JP 2005-228033 A  (Fuji Xerox Co., Ltd.),<br>25 August 2005 (25.08.2005),<br>entire text; all drawings<br>(Family: none) | 1-18 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 May, 2013 (08.05.13) | Date of mailing of the international search report<br>21 May, 2013 (21.05.13) |
|---|---|
| Name and mailing address of the ISA/<br>Japanese Patent Office | Authorized officer |
| Facsimile No. | Telephone No. |

Form PCT/ISA/210 (second sheet) (July 2009)

37

**INTERNATIONAL SEARCH REPORT**

International application No.

PCT/JP2013/056345

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-208838 A  (Nippon Telegraph and Telephone Corp.), 04 August 2005 (04.08.2005), entire text; all drawings (Family: none) | 1-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008269106 A